# EUROPÄISCHE PATENTSCHRIFT

(11) **EP 0 477 406 B1**
(45) Veröffentlichungstag und Bekanntmachung des Hinweises auf die Patenterteilung: **15.11.1995**
(21) Anmeldenummer: 90118599.1
(22) Anmeldetag: 27.09.1990
(51) Int. Cl.: G06F 15/16

(54) **Multiprozessorsystem mit gemeinsamem Speicher**
Multiprocessor system with common memory
Système multiprocesseur avec mémoire commune

(43) Veröffentlichungstag der Anmeldung: 01.04.1992
(73) Patentinhaber: Siemens Nixdorf Informationssysteme Aktiengesellschaft, 33102 Paderborn (DE)
(72) Erfinder: Koppe, Gerd, Dipl.-Ing., D-8202 Bad Aibling (DE); Schulte, Franz, Dr. rer.nat., Dipl.-Phys., D-8011 Baldham (DE); Traulsen, Wilfried, Dipl.-Ing., D-8000 München 83 (DE); Yakovleff, André, Dipl.-Ing., North Adelaide SA-5006 (AU)
(74) Vertreter: Fuchs, Franz-Josef, Dr.-Ing.

(56) Entgegenhaltungen:
- EP-A- 0 276 076
- WO-A-88/08652
- Computer network vol. 3, 1979, Seiten 267-286; P.Kermani: "Virtual cut-through: a new computer communication switching technique"
- IEEE transactions on computers vol. C-36, no. 5, Mai 1987, Seiten 547-553; W. J.Dally: "Deadlock-free message routing in multiprocessor interconnection networks"
- ANGEWANDTE INFORMATIK. APPLIED INFORMATICS. vol. 28, no. 3, März 1986, BRAUNSCHWEIG DE Seiten 118-123; R. Buck-Emden: "Zur optimalen packetgrösse in rechnernetzen mit packetvermittlung"
- Proceedings of the 1989 international conference on parallel processing 8 August 1989, Seiten 14-18; W.S. Ho: "A novel strategy for controlling hot-spot congestion"

## Beschreibung

### Multiprozessorsystem mit gemeinsamem Speicher

Die Erfindung bezieht sich auf ein Multiprozessorsystem mit gemeinsamem Speicher entsprechend dem Oberbegriff des Patentanspruches 1.

Derartige Multiprozessorsysteme sind bereits bekannt, z.B. aus Giloi: "Rechnerarchitektur", Springer-Verlag, Berlin, 1981, insbesondere Kapitel 10.1 und 10.2, sowie Hwang-Briggs: "Computer Architecture and Parallel Processing", Mc Graw-Hill Book Company, New York, 1984, insbesondere Abschnitte 1.3.3, 7.1.2, 7.1.3 und 7.2.

Multiprozessorsysteme zeichnen sich gegenüber Monoprozessorsystemen durch höhere Verarbeitungsleistungen, Zuverlässigkeit und Verfügbarkeit aus. Auch sind sie an unterschiedliche Leistungsanforderungen leichter anpaßbar. Die Hardwareorganisation solcher Multiprozessorsysteme wird dabei in erster Linie durch das die Speichereinheiten und die Prozessoren miteinander verbindende Netzwerk oder Kommunikationssystem bestimmt, das als gemeinsames Bussystem oder als Kreuzschienenverteiler ausgebildet sein kann oder aber durch getrennte Zugänge zum gemeinsamen Speicher gebildet wird.

Hinsichtlich der Erweiterbarkeit unterliegt ein gemeinsames Bussystem den geringsten Einschränkungen, jedoch sind hierüber keine unabhängigen Übertragungswege gleichzeitig herstellbar, sondern nur nacheinander. Andererseits erfordern Multi-Port-Speicher und Kreuzschienenverteiler eine auf einen Maximalausbau des Systems bezogene Vorleistung, so daß sich Multiprozessorsysteme mit geringem Ausbaugrad nicht kostengünstig herstellen lassen.

Aufgabe der Erfindung ist es, ein Multiprozessorsystem zu schaffen, daß ausgehend von einem Monoprozessorsystem ohne große Vorleistung in einem vorgegebenen Rahmen erweiterbar ist und daß die gleichzeitige Herstellung von unabhängigen Übertragungswegen und damit eine leistungssteigernde Parallelarbeit bei hoher Zuverlässigkeit mit nur geringem Aufwand zuläßt.

Diese Aufgabe wird durch die kennzeichnenden Merkmale des Patentanspruches 1 gelöst.

Die neue Lösung beruht auf der Verwendung von an sich bekannten Maßnahmen der Nachrichtenvermittlungs-und -übertragungstechnik in neuartiger Kombination und angepaßt an die Besonderheiten eines Multiprozessorsystems mit gemeinsamem Speicher. So sind die einzelnen Einheiten jeweils sternförmig über bidirektionale Übertragungskanäle an einen Verbindungsknoten angeschlossen, und die Verbindungsknoten sind über Verbindungskanäle in Form von ebenfalls bidirektionalen Übertragungskanälen miteinander verbunden die so das Sternnetz eines jeden Verbindungsknotens erweitern.

In jedem Verbindungsknoten können im Gegensatz zu einem Bussystem mehrere Übertragungswege gleichzeitig durchgeschaltet werden. Außerdem können ausgehend von einem Monoprozessorsystem mit einem Prozessor, einer Speichereinheit und einem Ein-/Ausgabesystem an einem Verbindungsknoten durch Vorhaltung weiterer Übertragungskanäle als Verbindungskanäle zu anderen Verbindungsknoten Erweiterungen im Rahmen eines Multiprozessorsystems ohne große Vorleistung vorgenommen werden, da weitere Verbindungsknoten erst im Rahmen der Erweiterung aufzuwenden sind.

Weiterhin arbeiten die Verbindungsknoten unabhängig voneinander ohne zentrale Aufsicht. Sie dienen lediglich dazu, einen der jeweils ankommenden Übertragungskanäle mit einem der abgehenden Übertragungskanäle zu verbinden, wobei allein die in einer über einen ankommenden Übertragungskanal eintreffenden Steuerinformation enthaltene Zieladresse für die Auswahl des jeweils abgehenden Übertragungskanales maßgebend ist. Der Aufwand für den einzelnen Verbindungsknoten bleibt daher auch bei Vorhaltung von Übertragungskanälen für die Erweiterung im Rahmen eines Multiprozessorsystems mit vorgegebenem Maximalausbau verhältnismäßig gering.

Die Verbindungsknoten brauchen dabei nicht vollständig vernetzt zu sein, sondern die einzelnen Übertragungswege können sich auch über eine vorgegebene maximale Anzahl von Verbindungsknoten erstrecken. Das vermindert einerseits die Anzahl der benötigten Verbindungskanäle ohne Einschränkung der Verkehrsmöglichkeiten zwischen den einzelnen Verbindungsknoten und ermöglicht andererseits bei einer vorgegebenen Anzahl von an einem Verbindungsknoten angeschlossenen bidirektionalen Verbindungskanälen eine größere Anzahl von vernetzbaren Verbindungsknoten.

Nun arbeiten derartige Kommunikationsnetze nicht immer verklemmungsfrei, wenn nicht besondere Maßnahmen ergriffen werden, d.h. eine über einen Verbindungskanal übertragene Nachricht kann an einem Verbindungsknoten nicht weitergeleitet werden, weil der benötigte Verbindungskanal bereits belegt ist, dieser aber seine Nachricht ebenfalls nicht absetzen kann usw., so daß geschlossene Warteschleifen entstehen, die das Netz blokkieren. In solchen Fällen sind die Verbindungsmöglichkeiten zwischen den Verbindungsknoten einzuschränken und die Übertragungswege entsprechend einem vorgegebenem Wegeschema herzustellen, bei dem alle zugelassenen Übertragungswege zwischen zwei Verbindungsknoten des Netzes über entsprechend einem schleifenfreien Abhängigkeitsgraphen vorgegebene Ketten von Verbindungskanälen verlaufen.

Außerdem ist es bekannt, Verbindungsnetze mit ursprünglich geschlossenem Abhängigkeitsgraphen in solche mit schleifenfreiem Abhängigkeitsgraphen zu überführen, indem die vorhandenen physikalischen Verbindungskanäle als virtuelle Übertragungskanäle in vorgegebener Rangfolge betrieben werden - man siehe z.B. IEEE Transactions on Computers, Vol. C-36, No. 5, May 1987, Seiten 547 - 553.

Aber trotz Verwendung von schleifenfreien Netzen ohne den Betrieb der physikalischen Verbindungskanäle als virtuelle Kanäle kann es in Multiprozessorsystemen mit gemeinsamem Speicher zu Systemverklemmungen kommen, da die an die Verbindungsknoten angeschlossenen Speichereinheiten bei der Anforderung von Lesedaten durch eine operative Einheit als Transferpuffer wirken, die zwei Übertragungswege starr miteinander koppeln. Dieser Tatsache trägt die Erfindung dadurch zusätzlich Rechnung, daß unabhängig von dem für das Netzwerk der Verbindungsknoten maßgebenden Wegeschema alle Übertragungskanäle als virtuelle Kanäle betrieben werden und durch Speichereinheiten gekoppelte Übertragungswege über virtuelle Übertragungskanäle eines unterschiedlichen, aber innerhalb desselben Übertragungsweges jeweils desselben Prioritätsranges verlaufen.

Weiterbildungen der Erfindung ergeben sich aus den Unteransprüchen, wobei die Unteransprüche 2 bis 4 und 12 sich auf die Wahl der verschiedenen Prioritätsränge für die virtuellen Übertragungskanäle abhängig von dem mit einer zu übertragenden Nachricht auszuführenden Auftrag, die Unteransprüche 5 bis 11 sich auf Auswirkungen bei der Verwendung privater Cachespeicher für die Prozessoren und damit verbundene Steuerungsabläufe, die Unteransprüche 13 bis 20 sich auf durch unterschiedliche Übertragungsverfahren bedingte Steuerungsabläufe bei der Herstellung eines Übertragungsweges und die Unteransprüche 21 bis 25 sich auf Besonderheiten der Netzstruktur für die Verbindungsknoten beziehen.

Einzelheiten der Erfindung seien nachfolgend anhand der Zeichnung näher erläutert. Im einzelnen zeigen
- FIG 1: ein allgemeines Strukturbild eines Multiprozessorsystems mit gemeinsamem Speicher,
- FIG 2: ein Strukturbild eines Multiprozessorsystems gemäß der Erfindung,
- FIG 3 bis FIG 8: auf das Strukturbild von FIG 2 bezogene Darstellungen der Kanalabhängigkeitsgraphen für verschiedene Kommunikationsphasen zwischen den einzelnen Einheiten zur Erläuterung der Notwendigkeit von virtuellen Kanälen,
- FIG 9: eine vereinfachte Darstellung des vollständigen Abhängigkeitsgraphen mit den benötigten Prioritätsrängen,
- FIG 10: einen Verbindungsknoten mit den benötigten virtuellen Kanälen für die einzelnen Einheiten und die Verbindungskanäle,
- FIG 11: eine Übersichtstabelle der zwischen den einzelnen Einheiten als Quellen und Senken des Verbindungsnetzwerkes benötigten virtuelle Kanäle mit ihrem Prioritätsrang in Anlehnung an FIG 9 und 10,
- FIG 12: ein Ablaufdiagramm für die Nachrichtenübertragung,
- FIG 13: ein Blockschaltbild eines Verbindungsknotens,
- FIG 14: ein Blockschaltbild einer Auswahleinrichtung für die ankommenden verschiedenen virtuellen Kanäle eines physikalischen Kanals gemäß FIG 13,
- FIG 15: ein Ablaufdiagramm für die Wegedurchschaltung in einem Verbindungsknoten gemäß FIG 13,
- FIG 16 bis FIG 18: Netzwerkkonfigurationen für Multiprozessorsysteme mit 2, 4 und 8 Verbindungsknoten in einem binären n-dimensionalen System und
- FIG 19: ein Blockschaltbild einer Auswahleinrichtung in Anlehnung an die von FIG 14 für die Netzwerkkonfigurationen von FIG 16 bis FIG 18.

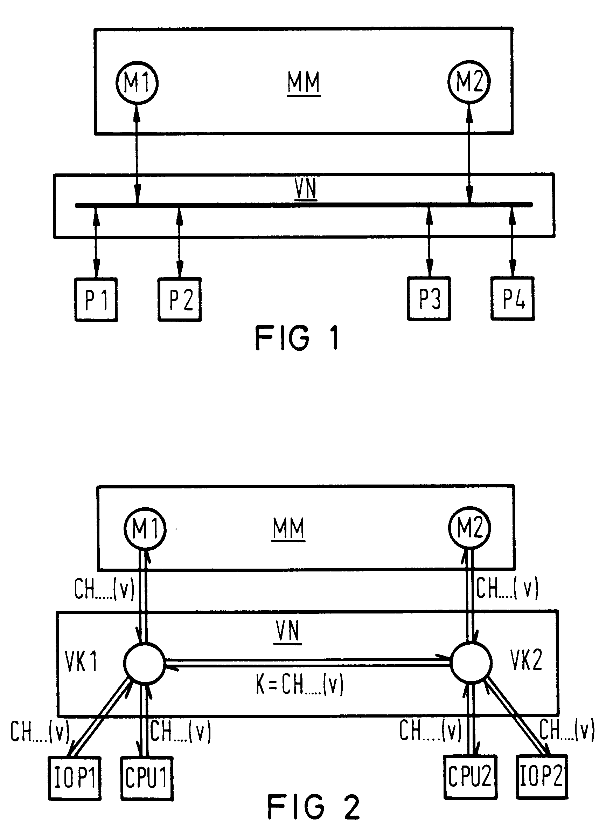

FIG 1 zeigt das Strukturbild eines herkömmlichen Multiprozessorsystems, bestehend aus mehreren Verarbeitungseinrichtungen in Form von verschiedenen Prozessoren P1 bis P4, die über ein als Bussystem ausgebildetes Vermittlungsnetzwerk VN auf die einzelnen Speichereinheiten M1 und M2 des gemeinsamen Speichers MM zugreifen können. Die Anzahl der Speichereinheiten M... und der Verarbeitungseinrichtung P... kann dabei beliebig groß sein, jedoch kann zu jedem Zeitpunkt nur ein Übertragungsweg zwischen zwei Einheiten über das Bussystem des Vermittlungsnetzwerkes VN hergestellt werden.

FIG 2 zeigt demgegenüber ein Strukturbild für ein Multiprozessorsystem gemäß der Erfindung, bei dem das Vermittlungsnetzwerk VN aus Verbindungsknoten VK1 und VK2 besteht, die durch bidirektionale Verbindungskanäle K als bidirektionale Übertragungskanäle CH...(v) miteinander verbunden sind und an die alle Einheiten M..., CPU..., IOP... in gleicher Weise über bidirektionale Übertragungskanäle CH...(v) angeschlossen sind, wobei gemäß der Erfindung alle Übertragungskanäle als virtuelle Kanäle betrieben werden. Die Anzahl der Verbindungsknoten VK... im Vermittlungsnetzwerk VN kann ebenfalls beliebig groß und die Beschaltung der einzelnen Verbindungsknoten VK... mit Speichereinheiten M und operativen Einheiten in Form von Prozessoren CPU... und Ein-/Ausgabesystemen IOP... wahlweise unterschiedlich sein.

Ausgehend von einem Verbindungsknoten VK.. mit einer oder zwei Speichereinheiten M..., einem Prozessor CPU... und einem Ein-/Ausgabesystem IOP... als Monoprozessor kann in Verbindung mit einem gleichartig beschaltetem Verbindungsknoten auf ein Biprozessorsystem als kleinstes Multiprozessorsystem erweitert werden, das durch hinzufügen weiterer Verbindungsknoten VK... zu einem Multiprozessorsystem der gewünschten Größe ausgebaut werden kann. Als Vorleistung für einen konzipierten Maximalausbau mit n Verbindungsknoten VK... ist lediglich eine ausreichende Anzahl von Verbindungskanälen K... an jedem Verbindungsknoten VK... und eine entsprechend ausgelegte Durchschaltesteuerung zu erbringen. So lassen sich z.B. bei drei an einem Verbindungsknoten VK... angeschlossenen Verbindungskanälen K... Multiprozessorsysteme mit bis zu 8 Verbindungsknoten und entsprechend vielen Prozessoren CPU realisieren, wobei an jedem Verbindungsknoten VK... gleichzeitig mehrere Übertragungswege durchgeschaltet werden können.

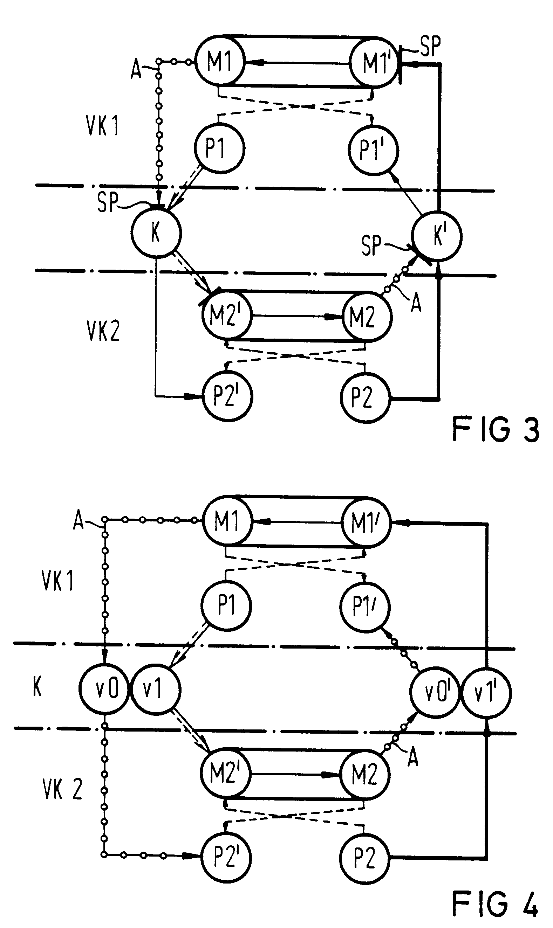

FIG 3 zeigt einen der Struktur des Multiprozessorsystems von FIG 2 entsprechenden Kanalabhängigkeitsgraphen. Jeder Kreis entspricht einem Übertragungskanal CH...(v), der entsprechend den eingetragenen Verbindungslinien mit den anderen Übertragungskanälen in Beziehung steht. Die einzelnen Übertragungskanäle sind dabei gleichlautend wie die zugehörigen Einheiten M..., P... und die Verbindungskanäle K... bezeichnet, wobei die jeweils zweite Übertragungsrichtung eines jeden bidirektionalen Übertragungskanales mit "′", also z.B. M1′, gekennzeichnet ist. Da zur Vermeidung von Konsistenzproblemen die Speichereinheiten M... bei einer Anforderung gesperrt bleiben, bis die Anforderung erledigt ist, also z.B. die angeforderten Daten abgesetzt sind, sind der jeweils ankommende und abgehende Übertragungskanal, z.B. M1′ und M1 durch parallele Striche mit einem Richtungspfeil in der Mitte verbunden, um die starre Kopplung zwischen dem ankommenden Übertragungsweg für die Leseanforderung und dem abgehenden Übertragungsweg für die angeforderten Lesedaten anzuzeigen.

Unterstellt man ausgehend von einem derartigen Abhängigkeitsgraphen, daß beide Speichereinheiten M1 und M2 eine Leseanforderung erhalten haben und daß während der Bereitstellungsphase für die jeweils gewünschten Daten der Prozessor P2 eine Anforderung über den Kanal K′ an die Speichereinheit M1 und der Prozessor P1 eine Anforderung über den Kanal K an die Speichereinheit M2 richtet, dann können diese Anforderungen von beiden Speichereinheiten nicht angenommen werden. Beide Anforderungen laufen daher auf eine Sperre und halten den jeweiligen Kanal K′ bzw. K belegt, so daß beide Speichereinheiten M1 und M2 die vorher angeforderten Daten nicht mehr absetzen können. Die jeweiligen Sperren SP sind durch Querstriche am jeweils gesperrten Übertragungskanal angedeutet. Die bestehende geschlossene Schleife läßt sich nur aufbrechen, wenn die einzelnen physikalischen Kanäle K und K′ mit zwei virtuellen Kanälen betrieben werden, wie es in FIG 4 mit den virtuellen Kanalpaaren v0/v1 und v0′/v1′ angedeutet ist, um den Anforderungsweg vom Datentransferweg A zu trennen.

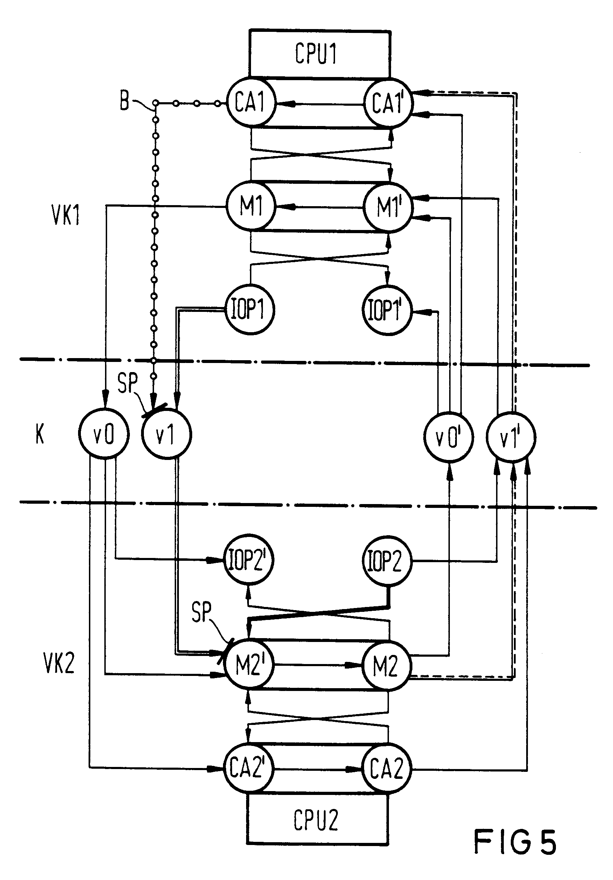

Ähnliche Verklemmungen können sich bei Verwendung von privaten Cachespeichern CA... an den einzelnen Prozessoren ergeben. FIG 5 zeigt einen gegenüber dem Abhängigkeitsgraphen von FIG 4 entsprechend erweiterten Abhängigkeitsgraphen, bei dem entsprechend FIG 2 zwischen Prozessoren CPU... und Ein-/Ausgabesystemen IOP... unterschieden wird. Kann in diesem Falle eine an eine Speichereinheit M... gerichtete Leseanforderung nicht von diesem unmittelbar erledigt werden, weil die angeforderten Daten sich in einem der Cachespeicher CA... befinden, dann muß die Speichereinheit M... die Anforderung an den jeweils zuständigen Cachespeicher CA... weiterleiten, der die Daten dann entweder direkt oder aber über die zuständige Speichereinheit M... zur anfordernden Einheit, z.B. IOP..., sendet. Da auch in diesem Fall ein Cachespeicher CA... belegt bleibt, bis die angeforderten Daten abgesetzt sind, ergibt sich wie bei den Speicherelementen M... eine starre Kopplung zwischen dem jeweils ankommenden und dem jeweils abgehenden Übertragungsweg, was in gleicher Weise durch parallele Verbindungsstriche und einem mittleren Richtungspfeil gekennzeichnet ist.

Unterstellt man in diesem Fall, daß das Ein-/Ausgabesystem IOP2 eine Leseanforderung an die Speichereinheit M2 gestellt hat, die dann an den Cachespeicher CA1 über den virtuellen Anforderungskanal v1′ weitergeleitet worden ist - ausgezogener und gestrichelter Übertragungsweg - dann bleibt die Speichereinheit M2 vorübergehend gesperrt. Eine weitere Anforderung des Ein-/Ausgabesystems IOP1 an diese Speichereinheit M2 läuft daher auf eine Sperre und hält den virtuellen Kanal v1 belegt. Will nun der Cachespeicher CA1 die von der Speichereinheit M2 angeforderten Lesedaten absetzen, so kann er dies nicht über den virtuellen Kanal v1. Wiederum ergibt sich eine geschlossene Schleife im Abhängigkeitsgraphen, die nur vermieden wird, wenn der Datentransferweg B vom Cachespeicher CA1 zur Speichereinheit M2 bzw. zur anfordernden Einheit IOP2 bei zusätzlicher Benachrichtigung der zuständigen Speichereinheit M2, um die bestehende Sperre wieder aufzuheben, auf einen vom Anforderungsweg über den virtuellen Kanal v1 getrennten virtuellen Kanal v0 geführt wird. Es muß also zwischen der Anforderung des Cachespeichers zur Herstellung eines Übertragungsweges für den Datentransfer und der Anforderung eines Prozessors für Lesedaten aus einer Speichereinheit M... getrennt werden.

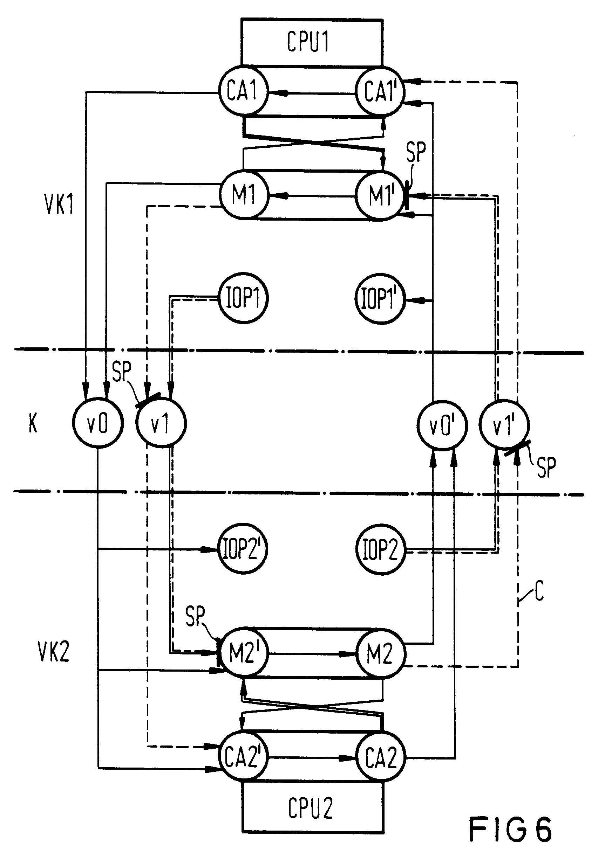

Weitere Verklemmungsmöglichkeiten ergeben sich gemäß FIG 6, wenn beispielsweise beide Prozessoren CPU1 und CPU2 jeweils eine Leseanforderung an die Speichereinheiten M1 bzw. M2 am eigenen Vermittlungsknoten VK1 bzw. VK2 gestellt haben und beide Speichereinheiten die Anforderung an den Cachespeicher CA2 bzw. CA1 am jeweils anderen Verbindungsknoten VK2 bzw. VK1 weiterleiten müssen. Erfolgen vor der jeweiligen Weiterleitung dann von den Ein-/Ausgabesystemen IOP1 und IOP2 weitere Leseanforderungen an die Speichereinheiten M2 bzw. M1 in den jeweils anderen Verbindungsknoten VK2 bzw. VK1, dann laufen beide Anforderungen auf eine Sperre an den Speichereinheiten M2 bzw. M1, durch die die virtuellen Übertragungskanäle v1 bzw. v1′ belegt gehalten werden. Dadurch wird wiederum die Weiterleitung der jeweiligen Anforderung von der Speichereinheit M1 bzw. M2 an den die gewünschten Daten aufweisenden Cachespeicher CA2 bzw. CA1 gesperrt, wenn diese ebenfalls über den virtuellen Anforderungskanal v1 bzw. v1′ geleitet wird und es daher zur Schleifenbildung kommt.

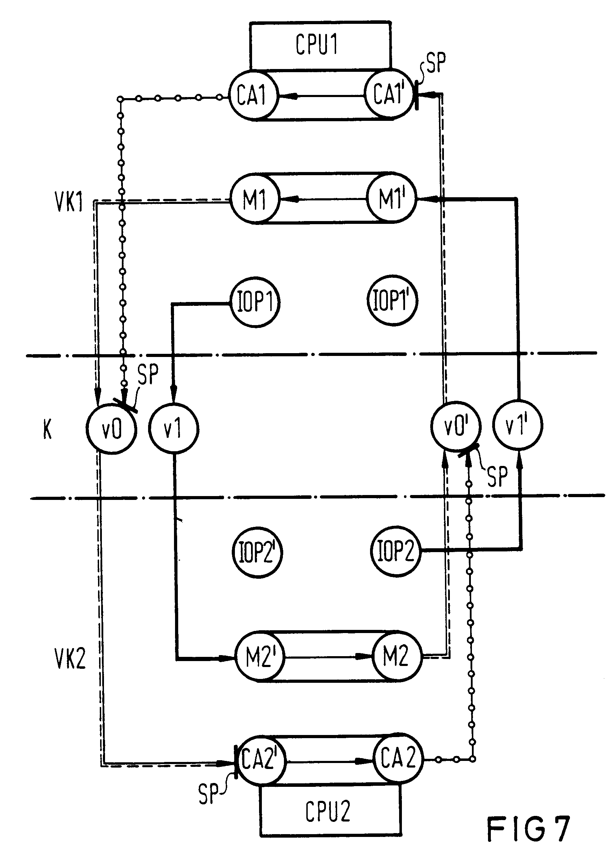

Bei dem gemäß FIG 7 gezeigten Abhängigkeitsgraphen sei unterstellt, daß beide Cachespeicher CA1 und CA2 aufgefordert worden sind, Lesedaten bereitzustellen. Ergehen in dieser Phase Lesedatenanforderungen von beiden Ein-/Ausgabesystemen IOP1 und IOP2 an die Speichereinheit M2 bzw. M1 im jeweils anderen Verbindungsknoten VK2 bzw. VK1, die von den dortigen Speichereinheiten M2 bzw. M1 nicht erledigt werden können, und daher als Anforderungen an die Cachespeicher CA1 bzw. CA2 weitergeleitet werden, bevor die angeforderten Lesedaten von den Cachespeichern zur Übertragung gelangt sind, dann laufen die über die virtuellen Kanäle v0′ bzw. v0 geleiteten Anforderungen der Speichereinheiten M2 bzw. M1 auf eine Sperre und sperren gleichzeitig die Verbindungskanäle v0 bzw. v0′ für das Absetzen der Lesedaten aus den Cachespeichern CA1 bzw. CA2.

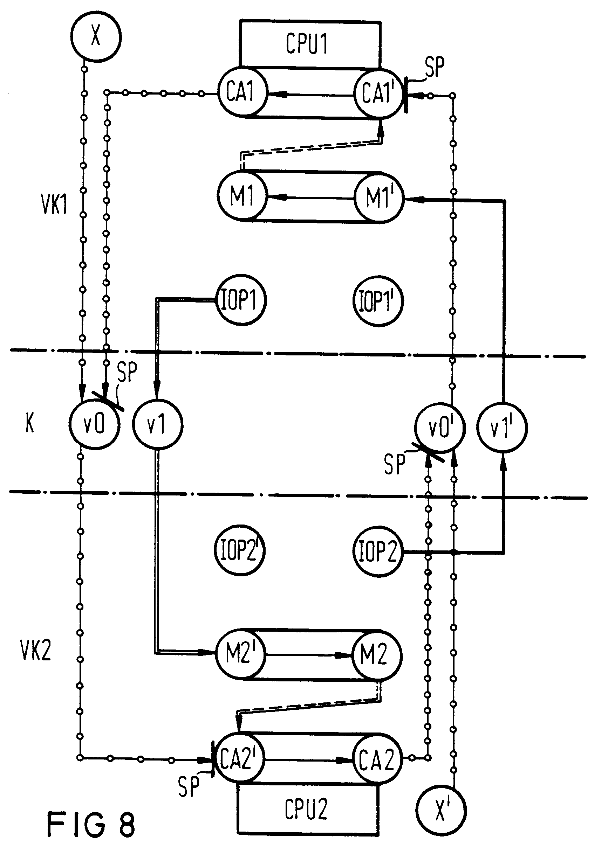

In gleicher Weise kommt es zu einer Schleifenbildung und damit zu einer Verklemmung, wenn gemäß FIG 8 beide Ein-/Ausgabesysteme IOP1 und IOP2 eine Anforderung an die Speichereinheiten M2 bzw. M1 im jeweils anderen Verbindungsknoten VK2 bzw. VK1 gestellt haben, die zur Weiterleitung der Anforderung an den Cachespeicher CA2 bzw. CA1 am jeweils eigenen Verbindungsknoten führen. Treffen in der Bereitstellungsphase der Cachespeicher CA... über die virtuellen Übertragungskanäle v0 bzw. v0′ weitere Anforderungen für diese Cachespeicher CA2 bzw. CA1 ein, dann laufen diese jeweils auf eine Sperre am jeweiligen Cachespeicher CA... und diese können wegen der andauernden Belegung der virtuellen Kanäle v0 bzw. v0′ ihre Daten nicht mehr absetzen.

In Bezug auf die anhand von FIG 5 bis FIG 8 erläuterten Beispiele kann man daher zusammenfassend feststellen, daß zur Vermeidung von Verklemmungssituationen virtuelle Übertragungskanäle mit wenigstens drei verschiedenen Prioritätsrängen zur Bildung der benötigten Übertragungswege für den Nachrichtenaustausch erforderlich sind, nämlich ein Prioritätsrang für die Übertragung von Anforderungen der operativen Einheiten CPU..., IOP... an die Speichereinheit M..., einen weiteren Prioritätsrang für die Weiterleitung von Lesedatenanforderungen an den zuständigen Cachespeicher CA..., wenn die Daten in der zuständigen Speichereinrichtung M... nicht greifbar sind, und wenigstens ein dritter Prioritätsrang für den Datentransfer von den Speichereinheiten M... zu den anfordernden operativen Einheiten CPU..., IOP... bzw. von den Cachespeichern CA... über die jeweilige Speichereinheit M... zur anfordernden Einheit.

Allgemein gilt, daß die Anzahl der insgesamt erforderlichen virtuellen Prioritätsränge von der Anzahl der für die Erledigung eines Auftrages insgesamt nacheinander herzustellenden Übertragungswege und der jeweilige Prioritätsrang eines Übertragungsweges von der Art des jeweils zu erledigenden Auftrages abhängig ist.

Für den Fall, daß die Lesedaten von einem Cachespeicher CA... geliefert und erst an die zuständige Speichereinheit M... übertragen werden, bevor sie an die operative Einheit CPU... oder IOP... weitergeleitet werden, kann für beide Transferwege der gleiche Prioritätsrang gewählt werden, da durch die jeweilige Sperrung der Speichereinheit M... gegen die Annahme weiterer Aufträge die Daten in jedem Fall von dieser angenommen und weitergeleitet werden können. Weitere Voraussetzung für den verklemmungsfreien Betrieb ist weiterhin, daß die anfordernden operativen Einheiten CPU... oder IOP... angeforderte Daten jederzeit annehmen können und somit immer offene Endpunkte im Abhängigkeitsgraphen bilden.

Um unnötige Verzögerungen zu vermeiden, werden Datentransfers zweckmäßig über die virtuellen Übertragungskanäle mit dem höchsten Prioritätsrang und Anforderungen der operativen Einheiten CPU... oder IOP... an eine Zieleinheit, die gegebenenfalls immer eine Speichereinheit M... sein kann, als Primäraufträge zum Schreiben oder Lesen von Daten immer über virtuelle Kanäle des niedrigsten Prioritätsranges geleitet.

Wie bereits angedeutet, können bei Verwendung von privaten Cachespeichern die Daten aus diesen zunächst an die zuständige Speichereinheit M... und dann an die anfordernde operative Einheit übertragen werden, oder aber die Daten werden vom Cachespeicher CA... jeweils direkt an die anfordernde Einheit weitergeleitet. Im letzteren Falle ist dann eine zusätzliche Benachrichtigung der zuständigen Speichereinheit M... hinsichtlich der sichergestellten Übertragung erforderlich, damit die bestehende Sperre wieder aufgehoben werden kann. Für die Übertragung dieser Nachricht können ebenfalls virtuelle Übertragungskanäle des höchsten Prioritätsranges oder ein gesondertes Netzwerk verwendet werden. Ausgangspunkt dieser Nachricht kann außerdem der Cachespeicher CA... selbst oder aber die anfordernde operative Einheit CPU... oder IOP... sein.

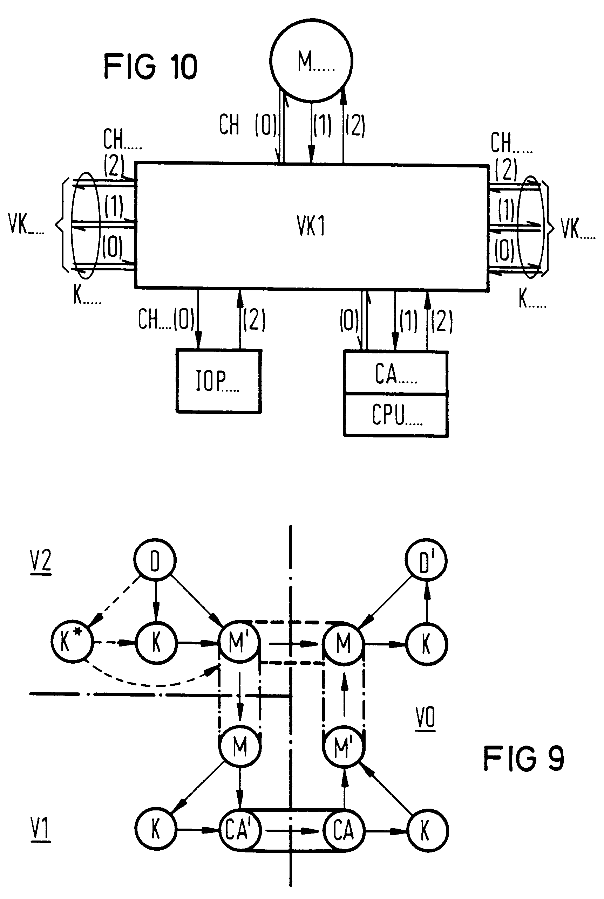

FIG 9 zeigt einen aus den Abhängigkeitsgraphen von FIG 5 bis FIG 8 abgeleitete vereinfachte Darstellung des vollständigen Abhängigkeitsgraphen für die möglicherweise nacheinander zur Abwicklung eines Auftrages aufzubauenden Übertragungswege in einem Multiprozessorsystem gemäß der Erfindung.

Anforderungen gehen dabei immer von einer der operativen Einheiten CPU... oder IOP..., zusammenfassend mit D bezeichnet, als Quellpunkt aus und werden in der virtuellen Ebene v2 mit der niedrigsten Priorität v=2 entweder direkt oder über zwischengeschaltete Verbindungskanäle K bzw. K*, deren Anzahl im Prinzip keine Rolle spielt, zu einer Speichereinheit M... als Endpunkt dieses ersten Übertragungsweges geleitet. Die Speichereinheit ist dann Quellpunkt für einen weiteren Übertragungsweg in einer höheren virtuellen Ebene, und zwar in der höchsten virtuellen Ebene v0, wenn die Daten in der Speichereinheit greifbar sind und unmittelbar an die anfordernde Einheit D als Endpunkt übertragen werden können, oder in einer virtuellen Zwischenebene v1, wenn zunächst der Übertragungsweg zu einem Cachespeicher CA... als Endpunkt - gegebenenfalls wieder direkt oder über zwischengeschaltete Verbindungskanäle K - aufgebaut werden muß. Als Quellpunkt leitet der angesteuerte Cachespeicher CA... dann in einen weiteren Übertragungsweg über, wobei Endpunkt im einen Falle unmittelbar die anfordernde Einheit D als offenes Ende des Graphen oder, wie dargestellt, zunächst die anfordernde Speichereinheit M... ist, von der dann ein weiterer Übertragungsweg zur anfordernden Einheit D führt. Da die Speichereinheit M... wegen der bestehenden Sperre gegen andere Anforderungen in diesem Falle ebenfalls wie ein offenes Ende des Abhängigkeitsgraphen wirkt, ist ein erneuter Wechsel der virtuellen Prioritätsebene nicht erforderlich. Für den gesamten Übertragungsweg vom Cachespeicher CA... über die Speichereinheit M... zur anfordernden Einheit D können daher einheitlich virtuelle Übertragungskanäle desselben Prioritätsranges, nämlich der höchsten Prioritätsebene v0, verwendet werden.

Aus dem vollständigen Abhängigkeitsgraphen von FIG 9 ist weiterhin ersichtlich, daß nicht alle physikalischen Übertragungskanäle an einem Verbindungsknoten VK in gleichem Umfange als virtuelle Übertragungskanäle CH...(v) betrieben werden müssen. Alle operativen Einheiten D ohne private Cachespeicher CA... benötigen abgehend und ankommend je nur einen virtuellen Kanal in der Ebene v2 bzw. v0. Alle operativen Einheiten mit Cachespeicher CA... benötigen zusätzlich einen ankommenden Kanal in der Ebene v1 und einen abgehenden Kanal in der Ebene v0, während für jede Speichereinheit M... je ein ankommender virtueller Kanal in der Ebene v2 und v0 sowie je ein abgehender Kanal in der Ebene v1 und v0 erforderlich ist. Lediglich die Verbindungskanäle K... zwischen den Verbindungsknoten VK... erfordern in jeder Übertragungsrichtung je einen Kanal in jeder der virtuellen Ebenen v2, v1 und v0. FIG 10 zeigt die entsprechende Verteilung der beim Anschluß der einzelnen Einheiten und Verbindungskanäle an einen Verbindungsknoten benötigten virtuellen Kanäle CH...(0) bis CH...(2).

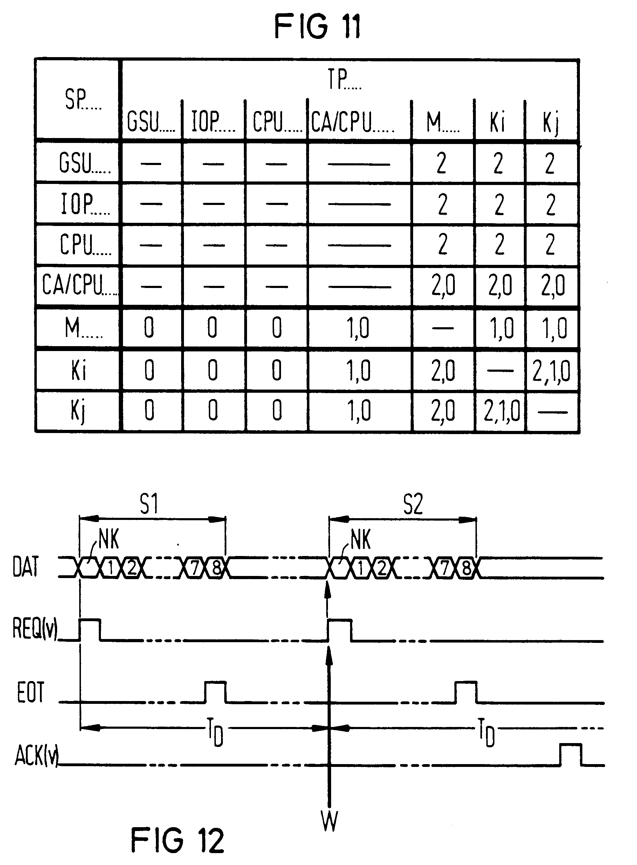

Eine entsprechende Übersichtstabelle mit den gemäß der vertikalen Auflistung als Quellpunkte SP... und gemäß der horizontalen Auslistung als Endpunkte TP... an einen Verbindungsknoten angeschlossenen Einheiten und Verbindungskanäle ist in FIG 11 wiedergegeben. Als Einheiten können in Frage kommen globale Speichereinheiten GSU..., Ein-/Ausgabesysteme IOP..., Prozessoren CPU ohne Cachespeicher, Prozessoren mit Cachespeicher CA/CPU... sowie Speichereinheiten M.... Dabei sind direkte Verbindungen zwischen ankommenden und abgehenden Übertragungskanälen derselben Einheit oder desselben Verbindungskanales sowie zwischen den Speichereinheiten M... ausgeschlossen, wie die waagerechten Striche in den einzelnen Feldern andeuten, während die Ziffern in den übrigen Feldern die einzelnen Prioritätsränge v=0, 1 oder 2 entsprechend den virtuellen Ebenen v0, v1 und v2 der virtuellen Übertragungskanäle CH...(v) angeben und zwar zeilenweise ankommend und spaltenweise abgehend mit Bezug auf die jeweilige Einheit oder den jeweiligen Verbindungskanal K....

Als Übertragungs- und Vermittlungsverfahren für den Nachrichtenaustausch zwischen den einzelnen Einheiten und Verbindungsknoten können im Prinzip die üblichen Verfahren verwendet werden - man siehe hierzu auch Computer Networks, Vol. 3 (1979), Seiten 267 - 286, insbesondere Abschnitt I. Introduction und IEEE Transactions on Computers, Vol. C-36, No. 5, May 1987, Seiten 547 - 553, insbesondere Abschnitt I. Introduction.

Besonders geeignet sind dabei Verfahren mit Unterteilung einer Nachricht in gleich lange Teile mit gemeinsamem Nachrichtenkopf, wobei der Nachrichtenkopf zur Steuerung der Wegedurchschaltung und die zugehörigen Nachrichtenteile jeweils nacheinander ausgesendet werden. Kann der Nachrichtenkopf einer Nachricht in einem Verbindungsknoten nicht unmittelbar weitergeleitet werden, weil der benötigte abgehende Kanal auf dem Weg zur Zieleinheit belegt ist, wird die Aussendung gestoppt. Der Nachrichtenkopf und die nachfolgenden Nachrichtenteile bleiben dann entlang des bereits durchgeschalteten Übertragungsweges gespeichert, bis nach Freiwerden des belegten Übertragungsgliedes die Übertragung fortgesetzt werden kann, oder aber die Aussendung wird von der sendenden Einheit insgesamt wiederholt. Beide Verfahren benötigen zur Steuerung ihres Ablaufes neben dem das Ende einer Nachricht kennzeichnenden Endesignal zusätzlich Steuerungssignale, z.B. um die Nachrichtenaussendung anzuhalten oder wieder fortzusetzen oder aber um eine Wiederholung der gesamten Nachricht anzufordern, ohne daß damit die sendende Einheit bereits Gewißheit darüber erlangt, ob die ausgesandte Nachricht auch am Zielort angekommen ist. Dies müßte gesondert überwacht oder signalisiert werden. Besonders vorteilhaft erscheint daher ein abgewandeltes neuartiges Verfahren, bei dem ausgehend von dem zuletzt genannten Verfahren mit Sendewiederholung nur das Erreichen des Endpunktes eines Übertragungsweges dem jeweiligen Ausgangspunkt durch eine Rückmeldung bestätigt wird. Trifft diese Rückmeldung nicht bis zu einem vorgegebenen Zeitpunkt nach Beginn der Nachrichtenaussendung ein, dann wird die gesamte Nachricht automatisch wiederholt. Die vorgegebene Wartezeit läßt sich dabei sehr einfach von der Laufzeit einer Nachricht zum vorgegebenen Zielpunkt ableiten. Ist die Nachricht ausreichend lang und der Übertragungsweg kurz, kann das Rückwärtssignal ohne weiteres bereits eintreffen, bevor das Endesignal gesendet worden ist. Außerdem wird insgesamt nur ein Rückwärtssignal benötigt, und es sind in den Verbindungsknoten keine Speicher für eine länger andauernde Zwischenspeicherung erforderlich.

FIG 12 zeigt einen entsprechenden Übertragungsablauf. Die mit DAT bezeichnete Zeile gibt die zu übertragende Nachricht wieder, die aus einem Nachrichtenkopf NK und beispielsweise den Nachrichtenteilen 1 bis 8 besteht. Der Nachrichtenkopf NK wird jeweils von einem gesonderten Anforderungssignal REQ(v) und der jeweils letzte Nachrichtenteil von einem Endesignal EOT begleitet. Mit der ersten Aussendung S1 der Nachricht beginnt die Überwachungszeit T_{D}. Trifft die Rückmeldung ACK(v) nicht rechtzeitig ein, erfolgt automatisch eine Wiederholung S2 der gesamten Nachricht. Es kann dabei mehrere solcher Wiederholungen geben, bis die Rückmeldung ACK(v) eintrifft. Damit nun eine Nachricht nicht zu oft wiederholt werden muß, bis sie ihr Ziel erreicht, werden alle im Rahmen eines herzustellenden Übertragungsweges bereits belegten virtuellen Übertragungskanäle jeweils solange belegt gehalten, bis die Rückmeldung auf dem Wege zur sendenden Einheit eingetroffen ist. Der Übertragungsweg braucht also bei jeder Nachrichtenwiederholung nicht jeweils vom Anfangspunkt aus neu hergestellt zu werden.

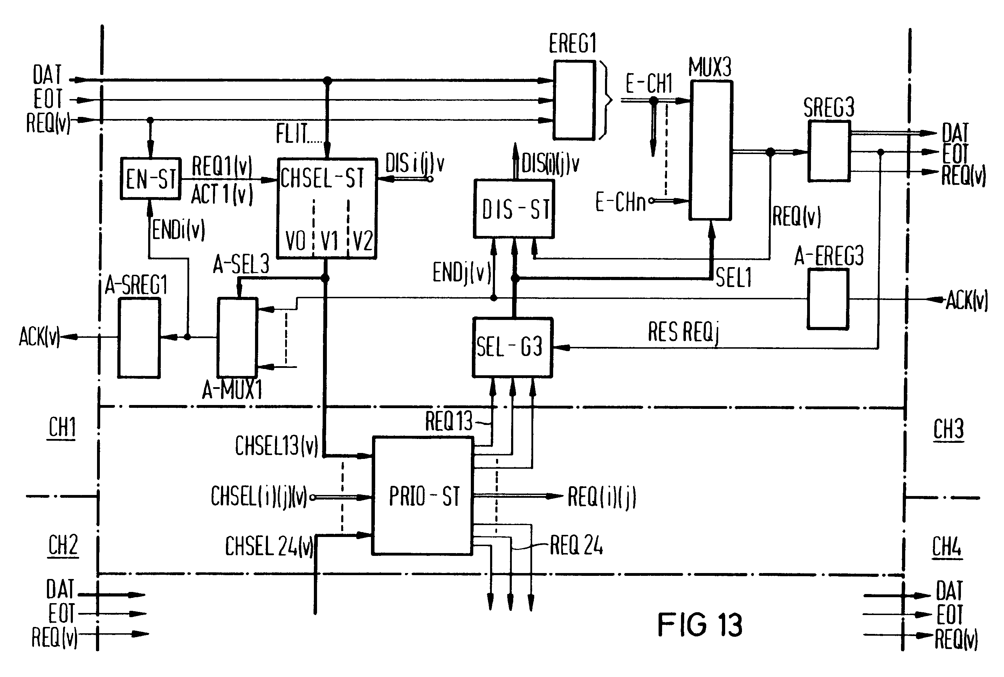

FIG 13 zeigt das Blockschaltbild eines entsprechend arbeitenden Verbindungsknotens. Gezeigt sind im linken Teil zwei ankommende physikalische Übertragungskanäle CH1 und CH2 sowie zwei abgehende physikalische Übertragungskanäle CH3 und CH4 im rechten Teil, wobei lediglich die physikalische Verbindung zwischen den Übertragungskanälen CH1 und CH3 mit den zugehörigen Übertragungsleitungen gemäß FIG 12 ausführlicher dargestellt ist.

Alle ankommenden Übertragungskanäle CH... werden mit ihren Übertragungsleitungen auf ein Empfangsregister EREG1 geführt, und von jedem Empfangsregister führt ein Verbindungsweg zu jedem abgehenden möglichen Übertragungskanal, genauer gesagt zu einem Eingang E-CH... eines Auswahlschalters, z.B. MUX3, der jedem abgehenden Kanal, z.B. CH3, individuell zugeordnet ist und an dessen Ausgang jeweils ein Senderegister, z.B. SREG3, angeschaltet ist. Beide Register werden periodisch wiederholt im Abstand voneinander getaktet, so daß jede über einen ankommenden Übertragungskanal ankommende Teilnachricht, Nachrichtenkopf oder Nachrichtenteil, daher nur kurzzeitig in den Registern EREG1 und SREG3 nacheinander gespeichert wird, um bei einem Nachrichtenkopf NK zwischenzeitlich die Einstellung des Auswahlschalters, z.B. MUX3, zu ermöglichen, wenn der gewünschte abgehende Kanal, z.B. CH3, frei ist.

Ist die Sendedauer für die einzelnen Teilnachrichten kleiner als die Zeit bis zur Einstellung des Auswahlschalters MUX... und damit bis zur Durchschaltung des Verbindungsweges zum Senderegister SREG..., dann kann durch dem Empfangsregister EREG... nachgeschaltete und im gleichen Rhythmus getaktete, nicht gezeigte Zwischenregister eine entsprechende Verzögerung in der Weiterleitung der Nachrichten erreicht werden.

In entgegengesetzter Richtung besteht ein gleichartiger aufgebauter Verbindungsweg für die Rückmeldung ACK(v) mit einem Empfangsregister, z.B. A-EREG3, einem Auswahlschalter, z.B. A-MUX1, und einem Senderegister, z.B. A-SREG1, so daß eine über einen abgehenden Kanal, z.B. CH3, ankommende Rückmeldung ACK(v) jedem ankommenden Kanal, z.B. CH1, zugeleitet werden kann.

Die Ermittlung des jeweils durchzuschaltenden Verbindungsweges erfolgt durch eine jedem ankommenden virtuellen Kanal CH...(v) zugeordnete Auswahleinrichtung CHSEL-ST(v...) zur Ermittlung des den jeweils zu belegenden abgehenden virtuellen Kanal einschließenden Wegesignales CHSELij(v) in Verbindung mit einer alle diese Wegesignale CH(i)(j)(v) auswertenden Prioritätssteuerung PRIO-ST.

Diese Auswahleinrichtungen CHSEL-ST... werden jeweils durch eine das Eintreffen einer Anforderung REQ(v) überwachenden Freigabeeinrichtung EN-ST, z.B. eine bistabile Kippstufe je Prioritätsrang v, zur Auswertung des zugehörigen Nachrichtenkopfes NK freigegeben.

Bei j abgehend belegbaren Übertragungskanälen können von jedem ankommenden Übertragungskanal ausgehend maximal j verschiedene Wegesignale für jede virtuelle Ebene, z.B. v0 bis v2, erzeugt werden. Jedem dieser Wegesignale entspricht ein Einstellsignal REQ(i)(j) von denen bei jeweils i zu einem Ausgangskanal durchschaltbaren ankommenden Kanälen sich jeweils i Einstellsignale auf denselben Ausgangskanal und damit denselben Auswahlschalter, z.B. MUX3, beziehen. Diese Gruppen von jeweils auf denselben abgehenden Kanal CHj bezogenen Einstellsignalen REQ(i)j werden jeweils einem, dem zugehörigen Auswahlschalter, z.B. MUX3, zugeordneten Einstellgenerator, z.B. SEL-G3, zugeführt, der daraus die Einstellinformation, z.B. SEL1, für den Auswahlschalter ableitet und speichert, bis das Endesignal EOT der Nachricht am Ausgang des zugehörigen Senderegisters, z.B. SREG3, erscheint.

Die physikalische Durchschaltung wird damit wieder freigegeben, nicht jedoch die Belegung des abgehenden virtuellen Kanals CH...(v). Die Aufrechterhaltung dieser Belegung wird durch die Einrichtung DIS-ST gesteuert, die alle von den übrigen ankommenden virtuellen Kanälen ausgehenden und denselben virtuellen abgehenden Kanal CH...j(v) betreffenden Wegesignale durch entsprechende Sperrsignale DIS(i)j(v) sperrt, wobei die jeweils auf einen ankommenden Kanal CHi bezogenen Sperrsignale DISi(j)(v) der jeweils zugehörigen Auswahleinrichtung CHSEL-STv... zugeleitet werden. Diese Sperrsignale werden in einfacher Weise aus der vom Einstellgenerator SEL-G... gelieferten Einstellinformationen SEL... in Verbindung mit dem vom weitergeleiteten Anforderungssignal REQ(v) angezeigten Prioritätsrang v abgeleitet und bleiben dann wirksam, bis ein von der ankommenden Rückmeldung ACK(v) abgeleitetes Endesignal ENDj(v) eintrifft. Bei der Weiterleitung der Rückmeldung an den jeweils ankommenden Übertragungskanal wird außerdem die Freigabeeinrichtung EN-ST wieder zurückgestellt, so daß das bisher gültige Wegesignal CHSELij(v) entfällt und damit auch der ankommende Kanal wieder freigegeben wird.

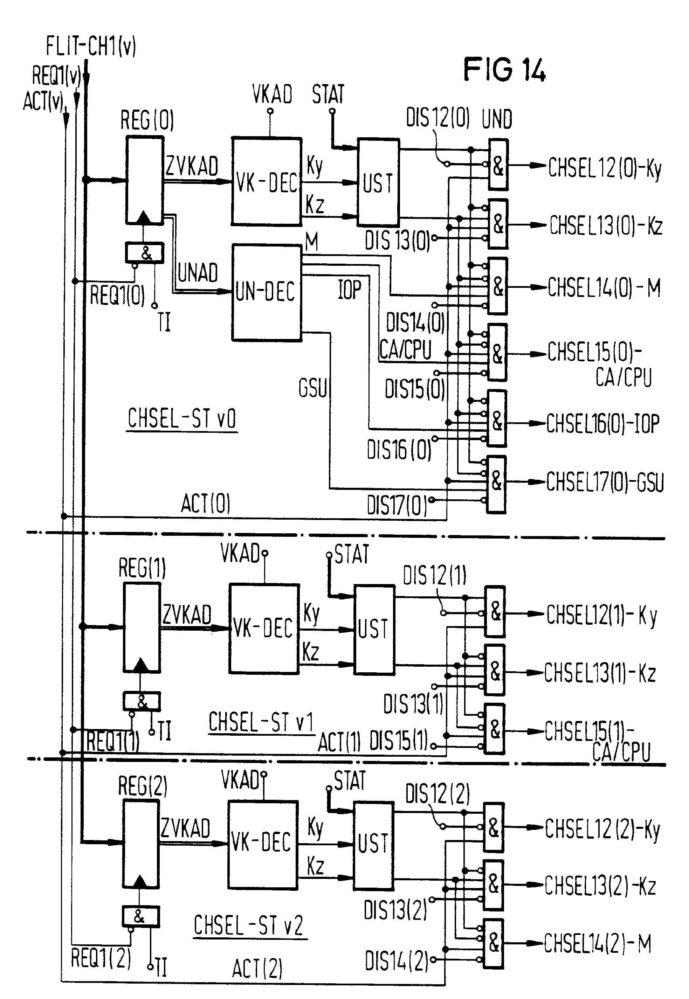

FIG 14 zeigt die für einen ankommenden Verbindungskanal, z.B. CH1 = Kx, benötigten Auswahleinrichtungen CHSEL-STv... für die drei möglichen virtuellen Kanäle des Prioritätsranges v = 0, 1 und 2. Alle drei Auswahleinrichtungen bestehen aus einem Eingangsregister REG(v) von denen eines bei Eintreffen eines Nachrichtenkopfes NK in Folge des gleichzeitigen Anforderungssignales, z.B. REQ1(v), die Ansteuerinformation FLIT... übernimmt, die die Adresse ZVKAD des Zielverbindungsknotens und die Adresse UNAD der Zieleinheit enthält. Mit der Einrichtung VK-DEC wird anhand der Adresse VKAD des erreichten Verbindungsknotens jeweils überprüft, ob ein anderer Verbindungsknoten anzusteuern und welcher abgehende Verbindungskanal, z.B. Ky oder Kz, zu belegen ist, oder ob eine der Einheiten am eigenen Verbindungsknoten anzusteuern ist. Im letzteren Fall ist wegen der entsprechend der Tabelle von FIG 11 gegebenen Verkehrsmöglichkeiten ein zusätzlicher Adressendecoder UN-DEC nur für den Prioritätsrang v = 0 erforderlich, da in den anderen Fällen nur ein Cachespeicher CA/CPU... oder eine Speichereinheit M... am eigenen Verbindungsknoten betroffen sein kann.

Für alle möglichen Ausgänge der Einrichtungen VK-DEC und UN-DEC ist weiterhin ein nachgeschaltetes UND-Glied UND vorgesehen, daß das jeweilige Wegesignal CHSEL... liefert, wenn nicht die Erzeugung durch ein entsprechendes Sperrsignal DIS... verhindert wird. Außerdem werden die Wegesignale CHSEL für Einheiten M..., CA/CPU..., IOP... oder GSU... am erreichten Verbindungsknoten unterdrückt, wenn einer der abgehenden Verbindungskanäle, z.B. Ky oder Kz, zu belegen ist. Dadurch wird verhindert, daß die Adresse UNAD irrtümlich ausgewertet wird, bevor der Zielverbindungsknoten erreicht worden ist. Weiterhin kann zwischen den Ausgängen der Einrichtung VK-DEC und den zugehörigen UND-Gliedern UND jeweils eine Umsteuereinrichtung UST vorgesehen sein, die bei Störung oder Nichtvorhandensein eines ausgewählten Verbindungskanales, z.B. Ky, anhand der zusätzlichen Informationen STAT eine Umsteuerung auf einen anderen Kanal, z.B. Kz, ermöglicht. Freigegeben werden die so ermittelten Wegesignale CHSEL... schließlich durch ein vom Eingangssignal, z.B. REQ1(v), verzögert abgeleitetes Signal ACT(v).

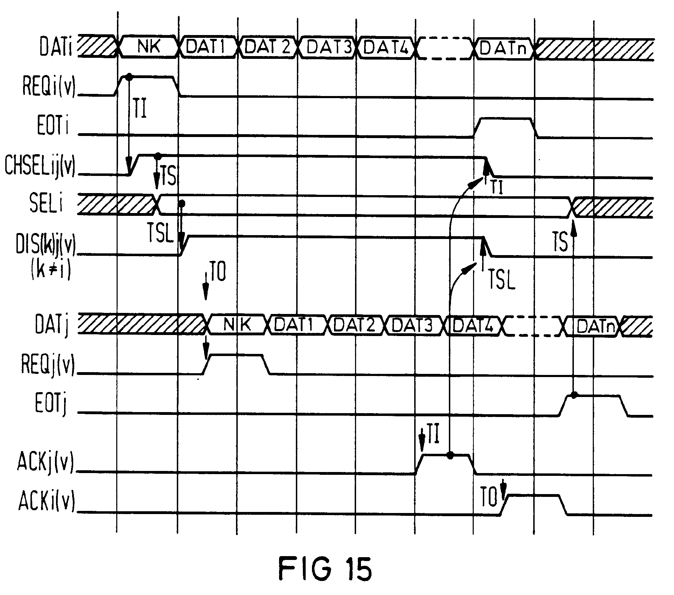

Damit ergibt sich der in FIG 15 dargestellte Steuerungablauf: Das parallel zu einem Nachrichtenkopf NK über einen Übertragungskanal CHi eintreffende Anforderungssignal REQi(v) führt, wenn kein Sperrsignal DIS... dies verhindert, mit einem Übernahmetakt TI zum Wegesignal CHSELij(v) für die Durchschaltung zum abgehenden Kanal CHj. Läßt die Prioritätssteuerung PRIO-ST die Durchschaltung zu, wird mit einem Steuertakt TS das Einstellsignal REQij und davon abhängig die Einstellinformation SELi erzeugt und gespeichert. Aufgrund des am Ausgang des zugehörigen Auswahlschalters MUXj wirksam werdenden weitergeleiteten Anforderungssignales REQj(v) werden dann mit einem Folgetakt TSL des Taktes TS die Sperrsignale DIS(k)j(v) für alle übrigen ankommenden Übertragungskanäle CH(k) außer für k = i erzeugt und gespeichert, so daß von diesen keine Wegesignale CHSEL(k)j(v) für den belegten abgehenden virtuellen Kanal CHj(v) erzeugt werden können. Nach Durchschaltung des Verbindungsweges zum abgehenden Kanal CHj erfolgt mit einem Ausgabetakt T0 die Übernahme der über ein Zwischenregister weitergeleiteten Teilnachrichten, die dann aufeinanderfolgend nach Eintreffen über die ankommenden Datenleitungen DATi über die abgehenden Datenleitungen DATj weitergeleitet werden. Analoges gilt für die Begleitzeichen REQi(v) → REQj(v) und EDTi → EOTj. Mit der Weiterleitung des Endesignales EOTj wird das Einstellsignal SELi wieder unwirksam und die physikalische Verbindungsdurchschaltung durch RESREQj wieder aufgehoben. Dagegen wird die Belegung des virtuellen Kanales mit Eintreffen der Rückmeldung ACKj(v) in rückwärtiger Richtung, das als ACKi(v) weitergeleitet wird, aufgehoben, indem zunächst mit ENDj(v) die Sperrsignale DIS(k)j(v) und anschließend das Wegesignal CHSELij(v) über die Freigabesteuerung EN-ST mit dem Signal ENDi(v) durch Beendigung des Signales ACT...(v) unwirksam geschaltet werden (FIG 13).

Wie bereits erwähnt, besteht eine weitgehende Gestaltungsmöglichkeit bezüglich des Verbindungsnetzes zur Verbindung der Verbindungsknoten untereinander und der Zuordnung der Verbindungskanäle zu den einzelnen Übertragungswegen - man siehe z.B. die bereits erwähnte Literaturstelle IEEE Transactions on Computers oder auch Computer Architecture News, 17, 1989, No. 6, Seiten 67 bis 79 und 80 bis 90.

Für die Wegedurchschaltung erscheinen Netzwerke, bei denen die einzelnen Verbindungsknoten Eckpunkte eines n-dimensionalen boolschen Würfels mit n-Verbindungskanälen an jedem Verbindungsknoten bilden, am günstigsten. Jeder Verbindungsknoten kann dann durch eine binäre, aus jeweils n-Bits bestehende Adresse gekennzeichnet werden, wobei jede Bitstelle einer Koordinate und damit einem Verbindungskanal des n-dimensionalen Netzwerkes entspricht. Zur Auswahl des jeweils abgehenden Verbindungskanals werden jeweils die Bitstellen der Zielknotenadresse und der Adresse des jeweils erreichten Verbindungsknotens verglichen, wobei bei einer vorgegebenen Rangfolge der Bitstellen jeweils die ranghöchste der voneinander abweichenden Bitstellen den auszuwählenden Verbindungskanal bestimmt.

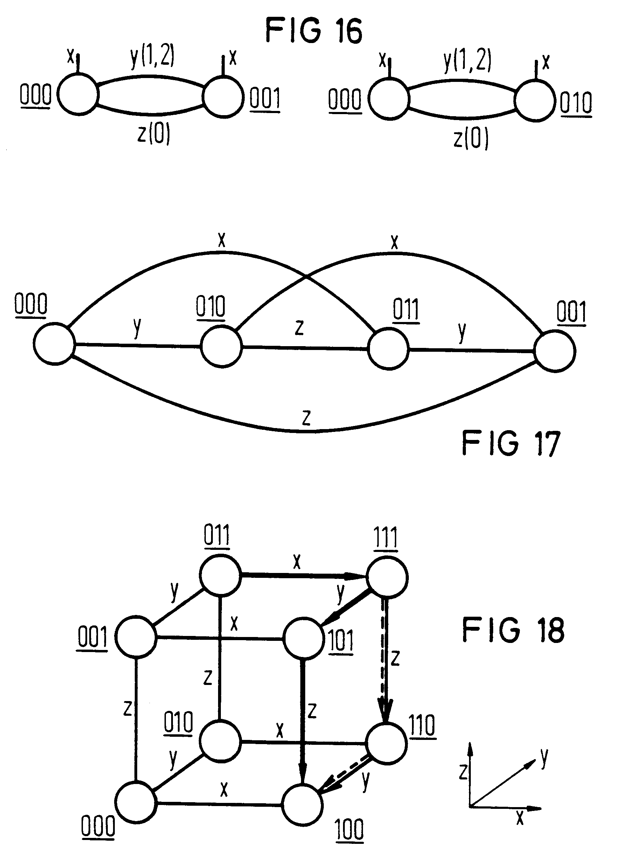

FIG 16 bis FIG 18 zeigen entsprechende Netzwerke für zwei Biprozessorsysteme (FIG 16), ein Quadroprozessorsystem (FIG 17) und ein Oktoprozessorsystem (FIG 18), die von einem Monoprozessorsystem ausgehend, dessen Verbindungsknoten als Vorleistung Anschlüsse für drei Verbindungskanäle Kx, Kj, Kz aufweist, durch fortlaufende Erweiterung gebildet werden können. Selbstverständlich sind auch noch andere Netzkonfigurationen nach dem selben Bildungsschema möglich und vor allem ist die Anzahl der Dimensionen n nicht auf drei beschränkt. Derartige Netzwerke haben den großen Vorteil, daß für einen verklemmungsfreien Nachrichtenaustausch im Netz keine zusätzlichen virtuellen Kanäle benötigt werden.

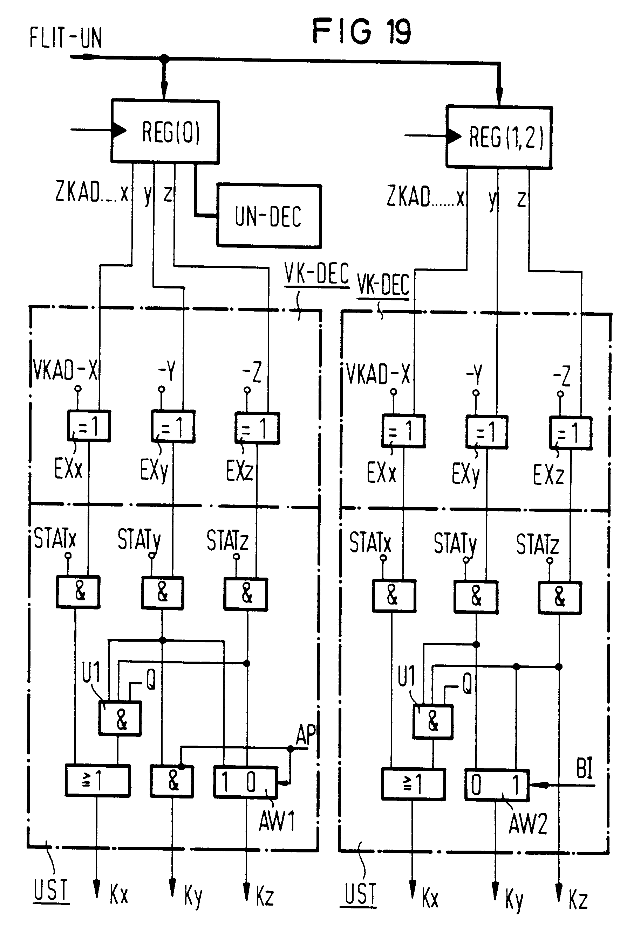

FIG 19 zeigt das mit Bezug auf die unterschiedlichen Konfigurationen von FIG 16 bis FIG 18 abgewandelte Blockschaltbild der in FIG 14 allgemein dargestellen Auswahleinrichtung CHSEL-STv... Ausführlicher dargestellt sind hierbei nur die Einrichtungen VK-DEC und UST. Die Zielknotenadresse ZVKAD besteht in diesem Falle aus 3 Bits x, y und z mit fallender Rangfolge. Diese werden durch exklusive ODER-Glieder EXx bis EXz mit den entsprechenden Bitstellen der Adresse VKAD des entscheidenden Verbindungsknotens verglichen. Stimmt wenigstens eine der Bitstellen nicht überein, ist ein abgehender Verbindungskanal K... zu belegen, wobei entsprechend FIG 14 jeweils der der ranghöchsten Bitstelle zugeordnete Verbindungskanal die Auswahl gewinnt und die anderen sperrt. Soll beispielsweise, wie in FIG 18 entsprechend den verstärkt gezeichneten Verbindungskanälen ein Übertragungsweg von einer Einheit am Verbindungsknoten "011" zu einer Einheit am Verbindungsknoten "100" hergestellt werden, so ergibt sich unter der Voraussetzung, daß kein Verbindungskanal gestört ist (STAT = 1), folgender Entscheidungsablauf: Am Ursprungsknoten "011" wird wegen 1 ≠ 0 bei der Bitstelle x der Kanal Kx belegt und somit der Verbindungsknoten "111" erreicht. Hier wird wegen 0 ≠ 1 an der Bitstelle y der Kanal Ky belegt und über diesen der Verbindungsknoten "101" angesteuert, wo wegen 0 ≠ 1 an der Bitstelle z der Kanal Kz zum Zielknoten "100" führt, an dem alle Bitstellen der Knotenadresse VKAD mit denen der Zielknotenadresse ZVKAD übereinstimmen.

Ist dagegen der Kanal Ky vom Verbindungsknoten "111" zum Verbindungsknoten "101" gestört und im Verbindungsknoten "111" demzufolge das Steuerbit "STATy" nicht gesetzt, dann kommt dort der Kanal Ky nicht zum Zuge, sondern wegen 0 ≠ 1 an der Bitstelle z der Kanal Kz zum Verbindungsknoten "110". Hier gilt dann 0 ≠ 1 an der Bitstelle y, so daß man über den Kanal Ky zum Zielknoten "100" gelangt. Bei mehreren Übertragungswegen zwischen zwei Verbindungsknoten im Netz ist also auch bei einem gestörten Verbindungskanal im Sollübertragungsweg in einfacher Weise eine Umlenkung möglich.

In analoger Weise ist, wie aus FIG 19 weiterhin ersichtlich, eine Umlegung der von den exklusiven ODER-Gliedern EX... ausgewählten Kanäle abhängig von der bei einem geringeren Ausbaugrad gegebenen Konfiguration entsprechend FIG 16 oder FIG 17 möglich. So läßt sich bei einem Quadroprozessorsystem mit dem Steuerbit Q die Umschaltung bewirken, indem trotz Gleichheit an der Bitstelle x mit Bezug auf die Verbindungsknoten "000" und "011" bzw. "010" und "001" die gleichzeitig entstehenden Auswahlsignale für die Kanäle Ky und Kz durch das UND-Glied U1 zur Kennzeichnung des Kanals Kx umgeleitet werden, während in den anderen Fällen der direkt ausgewählte Kanal Ky oder Kz zum Zuge kommt. In analoger Weise ermöglicht das Steuerbit AP in Verbindung mit einem Auswahlschalter AW1, daß der bei dem rechten Teil von FIG 16 dargestellten Konfiguration immer ausgewählte Kanal Ky zur Belegung des Kanals Kz beim Prioritätsrang v = 0 führt, während der bei der im linken Teil von FIG 16 dargestellten Konfiguration ständig ausgewählte Kanal Kz durch das Steuerbit BI in Verbindung mit einem Auswahlschalter AW2 zur Belegung des Kanals Ky beim Prioritätsrang v = 1 oder 2 führt. Dadurch ist auch bei einem Biprozessorsystem durch Verwendung von zwei statt eines einzigen Verbindungskanales mehr Sicherheit gegen Ausfall eines Verbindungskanales gegeben. Andererseits bringt die dann mögliche Aufteilung der benötigten virtuellen Kanäle auf zwei physikalische Verbindungskanäle einen höheren Nachrichtendurchsatz mit sich.

Bei Verwendung von Netzen für die Verbindungsknoten, die zur Sicherstellung eines verklemmungsfreien Betriebes ohnehin einen Betrieb der physikalischen Verbindungskanäle als virtuelle Übertragungskanäle erfordern, sind dagegen die gemäß der Erfindung auftragsbezogenen Prioritätsränge den einzelnen virtuellen Verbindungskanälen zu überlagern als wären sie physikalische Verbindungskanäle.

## Patentansprüche

1. Multiprozessorsystem mit gemeinsamem Speicher, der in mehrere individuell ansteuerbare Speichereinheiten unterteilt ist, auf die die einzelnen Prozessoren über ein Kommunikationssystem zum Austausch von Daten und Steuerinformationen zugreifen können,
**dadurch gekennzeichnet**,
- daß das Kommunikationssystem (VN) aus mehreren Verbindungsknoten (VK...) besteht, an die jeweils wenigstens ein Prozessor (CPU...) und/oder eine Speichereinheit (MU...) und/oder eine Ein-/Ausgabeeinheit (IOP...) über individuelle bidirektionale Übertragungskanäle (CH...) angeschlossen sind,
- daß die einzelnen Verbindungsknoten (z.B. VK1) entsprechend einer vorgegebenen Netzstruktur über bidirektionale Verbindungskanäle (K...) als Übertragungskanäle (CH...) mit anderen Verbindungsknoten (z.B. VK2) des Kommunikationssystems (VN) verbunden sind, so daß Übertragungswege zwischen einem jeden der Verbindungsknoten und einem beliebigen zweiten Verbindungsknoten als Ziel im Kommunikationssystem über einen oder mehrere in Reihe arbeitende Übertragungskanäle anhand der in der jeweiligen Steuerinformation enthaltenen Zieladresse herstellbar sind,
- daß zur Vermeidung von Systemverklemmungen den einzelnen physikalischen Übertragungskanälen (CH...) virtuelle Übertragungskanäle (CH...(v)) mit unterschiedlichem Prioritätsrang (z.B. v = 2, 1 oder 0) zugeordnet werden und für die Herstellung einer Verbindung zwischen zwei Einheiten an verschiedenen Verbindungsknoten jeweils ein einziger zugelassener Übertragungsweg entlang einer entsprechend einem schleifenfreien Abhängigkeitsgraphen vorgegebenen Kette der gebildeten virtueilen Übertragungskanäle verwendet wird und
- daß der jeweils zwischen zwei Einheiten (z.B. M1 und P2) herzustellende Übertragungsweg über virtuelle Übertragungskanäle desselben Prioritätsranges (z.B. v = 0) verläuft.

2. Multiprozessorsystem nach Anspruch 1,
**dadurch gekennzeichnet**, daß die Wahl des jeweiligen Prioritätsranges (v) der einen Übertragungsweg bildenden virtuellen Übertragungskanäle (CH...(v)) allein von der Art des mit der Herstellung des jeweiligen Übertragungsweges bezweckten Auftrages an die Zieleinheit (z.B. M...) abhängig ist.

3. Multiprozessorsystem nach Anspruch 2,
**dadurch gekennzeichnet**, daß bei durch einen primären Auftrag (z.B. Lesen) an eine Zieleinheit (z.B. M...) veranlaßten Folgeaufträgen für weitere Zieleinheiten (z.B. CA..., CPU...) zur Erledigung des primären Auftrages für jeden dadurch bedingten neuen Übertragungsweg jeweils virtuelle Übertragungskanäle eines nach vorgegebenem Schema geänderten Prioritätsranges verwendet werden.

4. Multiprozessorsystem nach Anspruch 3,
**dadurch gekennzeichnet**, daß primäre Aufträge (Lesen, Schreiben) immer nur von operativen Einheiten (Prozessor CPU..., Ein-/Ausgabeeinheit IOP...) an Speichereinheiten (M...) des verteilten Speichersystems gerichtet und über virtuelle Übertragungskanäle des niedrigsten Prioritätsranges (z.B. v = 2) geleitet werden, während für jeden weiteren Übertragungsweg zur Erledigung eines Folgeauftrags jeweils virtuelle Übertragungskanäle eines höheren Prioritätsranges (z.B. v = 1 oder v = 0) verwendet werden, wobei die Lesedaten anfordernden operativen Einheiten (CPU..., IOP...) jederzeit zur Entgegennahme der Lesedaten bereit sind.

5. Multiprozessorsystem nach Anspruch 4,
**dadurch gekennzeichnet**, daß bei Verwendung von den Prozessoren (CPU...) vorgeschalteten individuellen Cachespeichern (CA...) ein primärer Auftrag zum Lesen von Daten aus einer der Speichereinheiten (z.B. M2), die sich in einem individuellen Cachespeicher (z.B. CA1) befinden, einen ersten die Leseanforderung an den zuständigen und jederzeit unterbrechbaren Cachespeicher (CA1) weiterleitenden Folgeauftrag und wenigstens einen, die gewünschten Daten an die anfordernde Einheit (z.B. IOP2) weiterleitenden Folgeauftrag auslöst und daß die jeweils einen Leseauftrag annehmende Speichereinheit (M2) bis zur Sicherstellung der Übertragung der Daten an die anfordernde Einheit (IOP2) für die Annahme weiterer Primäraufträge gesperrt wird.

6. Multiprozessorsystem nach Anspruch 5,
**dadurch gekennzeichnet**, daß die an die anfordernde Einheit (z.B. IOP2) weiterzuleitenden Daten vom zuständigen Cachespeicher (z.B. CA1) im Rahmen eines gesonderten Folgeauftrages erst an die zuständige Speichereinheit (z.B. M2) und anschließend von dort an die anfordernde Einheit (IOP2) weitergeleitet werden, daß die den Leseauftrag ausführende Speichereinheit (M2) jeweils nach Sicherstellung der Zuordnung der Daten für die anfordernde Einheit (IOP2) für die Entgegennahme weiterer Primäraufträge freigegeben wird und daß für die letzten beiden Übertragungswege virtuelle Übertragungskanäle gleichen Prioritätsranges (z.B. v = 0) verwendet werden.

7. Multiprozessorsystem nach Anspruch 5,
**dadurch gekennzeichnet**, daß die an die anfordernde Einheit (z.B. IOP2) weiterzuleitenden Daten vom zuständigen Cachespeicher (z.B. CA1) unmittelbar an die anfordernde Einheit (IOP2) weitergeleitet werden und daß die den zugehörigen Leseauftrag ausführende Speichereinheit (z.B. M2) durch eine gesonderte Nachricht von der Übertragung der Daten an die anfordernde Einheit (IOP2) unterrichtet und auf Grund dessen die bestehende Sperre für die Entgegennahme weiterer Primäraufträge wieder aufgehoben wird.

8. Multiprozessorsystem nach Anspruch 7,
**dadurch gekennzeichnet**, daß die gesonderte Nachricht in Form eines Folgeauftrages an die zuständige Speichereinheit (z.B. M2) gesendet wird und daß für diesen Übertragungsweg virtuelle Übertragungskanäle (CH...(v)) desselben Prioritätsranges (z.B. v = 0) wie für den Übertragungsweg zur Weiterleitung der Daten an die anfordernde Einheit (z.B. IOP2) verwendet werden.

9. Multiprozessorsystem nach Anspruch 7,
**dadurch gekennzeichnet**, daß die gesonderte Nachricht über ein gesondertes Netzwerk an die zuständige Speichereinheit (z.B. M2) gesendet wird.

10. Multiprozessorsystem nach Anspruch 8 oder 9,
**dadurch gekennzeichnet**, daß die gesonderte Nachricht von dem die Daten zur anfordernden Einheit (z.B. IOP2) weiterleitenden Cachespeicher (z.B. CA1) ausgesendet wird.

11. Multiprozessorsystem nach Anspruch 8 oder 9,
**dadurch gekennzeichnet**, daß die gesonderte Nachricht von der die Daten empfangenden anfordernden Einheit (z.B. IOP2) ausgesendet wird.

12. Multiprozessorsystem nach einem der Ansprüche 4 bis 11,
**dadurch gekennzeichnet**, daß alle Datentransfers im Rahmen von Folgeaufträgen über virtuelle Kanäle (CHi(v)) des höchsten Prioritätsranges (z.B. v = 0) abgewickelt werden.

13. Multiprozessorsystem nach einem der Ansprüche 1 bis 12,
**dadurch gekennzeichnet**, daß jede auf einem virtuellen Übertragungskanal (z.B. CHi(v)) an einem Verbindungsknoten (VK...) ankommende Nachricht in einen dem virtuellen Kanal zugeordneten Pufferspeicher übernommen, anhand der mitgeführten Steuerinformation der zu belegende abgehende virtuelle Übertragungskanal (z.B. CHj(v)) ermittelt und die Nachricht weitergeleitet wird, wenn der benötigte abgehende Kanal (CHj(v)) frei ist.

14. Multiprozessorsystem nach Anspruch 13,
**dadurch gekennzeichnet**, daß Nachrichten in Teile konstanter Länge aufgeteilt und jeder Nachricht eine Steuerinformation (FLIT...(v)) in der Länge eines Nachrichtenteils vorangestellt wird, wobei alle Teile kontinuierlich aufeinanderfolgend vom jeweiligen Ausgangspunkt eines Übertragungsweges ausgesendet werden und das Ende der Nachricht gesondert gekennzeichnet wird (mit EOT), und daß die einzelnen Teile der Nachricht anhand der vorangehenden Steuerinformation (FLIT...(v)) von Verbindungsknoten (VK...) zu Verbindungsknoten (VK...) über den jeweiligen Pufferspeicher weitergeleitet werden, bis der Endpunkt des Übertragungsweges erreicht ist.

15. Multiprozessorsystem nach Anspruch 14,
**dadurch gekennzeichnet**, daß bei Erreichen eines belegten Übertragungskanales die weitere Aussendung von Nachrichtenteilen und deren Weiterleitung gestoppt wird, bis der benötigte Kanal frei wird.

16. Multiprozessorsystem nach Anspruch 14,
**dadurch gekennzeichnet**, daß bei Erreichen eines belegten Übertragungskanales die Aussendung der gesamten Nachricht vom Ausgangspunkt eines Übertragungsweges aus wiederholt wird.

17. Multiprozessorsystem nach Anspruch 16,
**dadurch gekennzeichnet**, daß nur das Erreichen des Endpunktes eines Übertragungsweges dem jeweiligen Ausgangspunkt durch eine Rückmeldung (ACK...(v)) bestätigt wird, daß bei Ausbleiben dieser Rückmeldung bis zu einem vorgegebenen Zeitablauf nach dem Beginn einer Aussendung die Aussendung der gesamten Nachricht automatisch wiederholt wird und daß alle im Rahmen eines herzustellenden Übertragungsweges belegten virtuellen Übertragungskanäle (CH...(v)) belegt bleiben, bis die Rückmeldung (ACK...(v)) vom Endpunkt eingetroffen ist, während die jeweils zugehörigen physikalischen Übertragungskanäle (CH...) nur solange belegt bleiben, bis das das Ende der Nachricht anzeigende Kennzeichen (EOT) empfangen und an den jeweils nachfolgenden Übertragungskanal weitergeleitet ist.

18. Multiprozessorsystem nach einem der Ansprüche 13 bis 17,
**dadurch gekennzeichnet**, daß mit der Steuerinformation (FLIT...(v)) einer Nachricht ein den Prioritätsrang (v) des jeweils benutzten virtuellen Übertragungskanales (CHi(v)) anzeigendes Kennzeichen (REQ...(v)) gekoppelt ist, daß die Zuordnung der auf den physikalischen Übertragungskanälen (CH...) übertragenen Steuerinformationen und Nachrichten zu den einzelnen virtuellen Übertragungskanälen (CH...(v)) siherstellt.

19. Multiprozessorsystem nach Anspruch 18,
**dadurch gekennzeichnet**, daß das den Prioritätsrang festlegende Kennzeichen (REQ...(v)) auf gesonderten Signalleitungen parallel zur Steuerinformation (FLIT...(v)) einer Nachricht übertragen wird und als Anforderungssignal die Wegeauswahl im jeweils erreichten Verbindungsknoten (VK...) einleitet.

20. Multiprozessorsystem nach Anspruch 18 oder 19,
**dadurch gekennzeichnet**,
- daß für jeden in einem Verbindungsknoten (VK...) ankommenden physikalischen Übertragungskanal (CH...) eine der Anzahl (z.B. 3) der zugehörigen virtuellen Kanäle (CH...(v) mit v = 2, 1 oder 0) entsprechende Anzahl (3) von Auswahleinrichtungen (CHSEL-ST(v)) vorgesehen ist, von denen die jeweils zuständige anhand des den Prioritätsrang (v) festlegenden Kennzeichens (REQ...(v)) ausgewählt wird,
- daß die jeweils ausgewählte Auswahleinrichtung (z.B. CHSEL-ST(v0)) anhand der in der Steuerinformation enthaltenen Zieladresse (ZVKAD, UNAD) ein virtuelles Wegesignal (CHSELij(v)) erzeugt, das den jeweils ankommenden Kanal (CHi(v)) und den jeweils mit diesem zu verbindenden abgehenden Übertragungskanal (CHj(v)) kennzeichnet,
- daß alle auf diese Weise erzeugten virtuellen Wegesignale (CHSEL(i)(j)(v)) einer gemeinsamen Prioritätssteuerung (PRIO-ST) zugeleitet werden, die für jeden abgehenden freien Übertragungskanal (CHj(v)) den auf diesen durchzuschaltenden ankommenden Kanal (CHi(v)) mit der höchsten Priorität ermittelt und daß anhand des dann abgespeicherten Ergebnisses (REQij) der zugehörige physikalische Übertragungsweg für die Übertragung unter gleichzeitiger Sperrung aller übrigen, denselben abgehenden virtuellen Übertragungskanal (CHj(v)) betreffenden Wegesignale (CHSEL(i)j(v)) freigegeben wird.

21. Multiprozessorsystem nach einem der Ansprüche 1 bis 20,
**dadurch gekennzeichnet**, daß gestörte Verbindungskanäle (K...) zwischen Verbindungsknoten (VK...) bei der jeweiligen Erzeugung der Wegesignale (CHSEL(i)(j)(v)) in den einzelnen Verbindungsknoten berücksichtigt werden.

22. Multiprozessorsystem nach einem der Ansprüche 1 bis 21,
**dadurch gekennzeichnet**, daß durch verschieden mögliche Konfigurationen des Multiprozessorsystems bedingte Kanalzuweisungen zwischen einzelnen Verbindungsknoten durch eine von der Konfiguration abhängige Umschaltesteuerung (UST) bei der Erzeugung der virtuellen Wegesignale (CH(i)(j)(v)) in den einzelnen Verbindungsknoten (VK...) berücksichtigt werden.

23. Multiprozessorsystem nach einem der Ansprüche 1 bis 22,
**dadurch gekennzeichnet**, daß bei mehreren physikalischen Verbindungskanälen (K...) zwischen zwei benachbarten Verbindungsknoten (VK...) die unterschiedlichen virtuellen Übertragungskanäle (CH...(v)) verschiedenen physikalischen Verbindungskanälen zugeordnet werden.

24. Multiprozessorsystem nach einem der Ansprüche 1 bis 23,
**dadurch gekennzeichnet**, daß die Verbindungsknoten (VK...) Eckpunkte eines n-dimensionalen Boolschen Würfels mit n Verbindungskanälen an jedem Verbindungsknoten (VK...) bilden, daß jeder Verbindungsknoten durch eine binäre, aus jeweils n Bits bestehenden Adresse (z.B. 001) gekennzeichnet wird, wobei jede Bitstelle einer Koordinate (z.B. x bzw. y bzw. z) und damit einem Verbindungskanal (z.B. Kx bzw. Ky bzw. Kz) des n dimensionalen Systems entspricht, und daß zur Auswahl eines abgehenden Verbindungskanals im Rahmen der Herstellung eines Übertragungsweges jeweils die Bitstellen der Zieladresse (z.B. ZVKAD = 101) mit der des jeweiligen Knotens (z.B. VKAD = 000) verglichen werden, wobei bei einer vorgegebenen Rangfolge der Bitstellen jeweils die ranghöchste der voneinander abweichenden Bitstellen den auszuwählenden Verbindungskanal (z.B. Kx) bestimmt.

25. Multiprozessorsystem nach einem der Ansprüche 1 bis 23,
**dadurch gekennzeichnet**, daß bei Verbindungsnetzwerken (VN), bei denen die Sicherstellung eines verklemmungsfreien Verkehrs zwischen den einzelnen Verbindungsknoten (VK...) einen Betrieb der Verbindungskanäle (K...) als virtuelle Kanäle (K(vv)) erfordert und die Herstellung eines Übertragungsweges zwischen jedem möglichen Paar von Verbindungsknoten entsprechend einem vorgegebenen, auf der Verwendung virtueller Verbindungskanäle beruhenden Wegesuchalgorithmus erfolgt, die auftragsbezogenen Prioritätsränge (z.B. v = 2, 1 oder 0) der virtuellen Übertragungskanäle (CH...(v)) den einzelnen virtuellen Verbindungskanälen (K(vv)) überlagert werden.

## Claims

1. Multiprocessor system with common memory which is divided into a plurality of individually addressable memory units to which the individual processors have access via a communication system for the exchange of data and control information, characterized
- in that the communication system (VN) comprises a plurality of connection nodes (VK...) to which in each case at least one processor (CPU...) and/or one memory unit (MU...) and/or one input/output unit (IOP...) are connected via individual bidirectional transmission channels (CH...),
- in that the individual connection nodes (e.g. VK1) are connected in accordance with a predetermined network structure via bidirectional connection channels (K...) as transmission channels (CH...) to other connection nodes (e.g. VK2) of the communication system (VN), so that transmission paths between each one of the connection nodes and an arbitrary second connection node as a destination in the communication system can be established over one or more transmission channels operating in series on the basis of the destination address contained in the respective control information,
- in that to avoid system deadlocks, virtual transmission channels (CH...(v)) having different priority ratings (e.g. v = 2, 1 or 0) are assigned to the individual physical transmission channels (CH...), and in each case a single permitted transmission path along a chain of the virtual transmission channels formed which was predetermined in accordance with a loop-free dependency graph is used for establishing a connection between two units at different connection nodes, and
- in that the transmission path to be established in each case between two units (e.g. M1 and P2) runs over virtual transmission channels having the same priority rating (e.g v = 0).

2. Multiprocessor system according to Claim 1, characterized in that the selection of the respective priority rating (v) of the virtual transmission channels (CH...(v)) forming a transmission path depends solely on the type of instruction to the destination unit (e.g. M...) for which the respective transmission path has been established.

3. Multiprocessor system according to Claim 2, characterized in that in the case of follow-up instructions, which were initiated by a primary instruction (e.g. read) to one destination unit (e.g. M...), for further destination units (e.g. CA..., CPU...) for executing the primary instruction, in each case virtual transmission channels having a priority rating altered according to a predetermined scheme are used for every resulting new transmission path.

4. Multiprocessor system according to Claim 3, characterized in that primary instructions (read, write) are only ever directed from operative units (processor CPU..., input/output unit IOP...) to memory units (M...) of the distributed memory system and routed via virtual transmission channels having the lowest priority rating (e.g. v = 2), whereas in each case virtual transmission channels having a higher priority rating (e.g. v = 1 or v = 0) are used for every further transmission path for executing a follow-up instruction, with the operative units (CPU..., IOP...) requesting the read data being ready to receive the read data at all times.

5. Multiprocessor system according to Claim 4, characterized in that if individual cache memories (CA...) connected so as to precede the processors (CPU...) are used, a primary instruction for reading data from one of the memory units (e.g. M2) located in an individual cache memory (e.g. CA1) triggers a first follow-up instruction which forwards the read request to the responsible cache memory (CA1) that can be interrupted at any time, and at least one follow-up instruction which forwards the desired data to the requesting unit (e.g. IOP2), and in that the memory unit (M2) accepting a read instruction in each case is blocked from accepting further primary instructions until the transmission of the data to the requesting unit (IOP2) has been ensured.

6. Multiprocessor system according to Claim 5, characterized in that, in the course of a separate follow-up instruction, the data to be forwarded to the requesting unit (e.g. IOP2) are forwarded from the responsible cache memory (e.g. CA1) first to the responsible memory unit (e.g. M2) and then from there to the requesting unit (IOP2), in that the memory unit (M2) carrying out the read instruction is released for accepting further primary instructions in each case after the assignment of the data for the requesting unit (IOP2) has been ensured, and in that virtual transmission channels having the same priority rating (e.g. v = 0) are used for the last two transmission paths.

7. Multiprocessor system according to Claim 5, characterized in that the data to be forwarded to the requesting unit (e.g. IOP2) are forwarded from the responsible cache memory (e.g. CA1) directly to the requesting unit (IOP2), and in that the memory unit (e.g. M2) carrying out the associated read instruction is notified by means of a separate message of the transmission of the data to the requesting unit (IOP2) and as a result the existing blocking of the acceptance of further primary instructions is removed again.

8. Multiprocessor system according to Claim 7, characterized in that the separate message is sent in the form of a follow-up instruction to the responsible memory unit (e.g. M2), and in that virtual transmission channels (CH...(v)) having the same priority rating (e.g. v = 0) as for the transmission path for forwarding the data to the requesting unit (e.g. IOP2) are used for this transmission path.

9. Multiprocessor system according to Claim 7, characterized in that the separate message is sent to the responsible memory unit (e.g. M2) via a separate network.

10. Multiprocessor system according to Claim 8 or 9, characterized in that the separate message is sent out from the cache memory (e.g. CA1) forwarding the data to the requesting unit (e.g. IOP2).

11. Multiprocessor system according to Claim 8 or 9, characterized in that the separate message is sent out from the requesting unit (e.g. IOP2) receiving the data.

12. Multiprocessor system according to one of Claims 4 to 11, characterized in that all data transfers in the course of follow-up instructions take place over virtual channels (CHi(v)) having the highest priority rating (e.g. v = 0).

13. Multiprocessor system according to one of Claims 1 to 12, characterized in that every message arriving on a virtual transmission channel (e.g. CHi(v)) at a connection node (VK...) is transferred into a buffer memory assigned to the virtual channel, the outgoing virtual transmission channel (e.g. CHj(v)) to be occupied is determined on the basis of the control information also carried, and the message is forwarded when the required outgoing channel (CHj(v)) is free.

14. Multiprocessor system according to Claim 13, characterized in that messages are divided into parts having constant lengths and each message is preceded by control information (FLIT...(v)) having the length of a message part, all parts being continuously sent out in sequence from the respective starting point of a transmission path, and the end of the message being specifically marked (with EOT), and in that the individual parts of the message are forwarded from connection node (VK...) to connection node (VK...) via the respective buffer memory on the basis of the preceding control information (FLIT...(v)) until the end point of the transmission path is reached.

15. Multiprocessor system according to Claim 14, characterized in that if an occupied transmission channel is encountered, the further transmission of message parts and their forwarding is halted until the required channel is free.

16. Multiprocessor system according to Claim 14, characterized in that if an occupied transmission channel is encountered, the transmission of the entire message is repeated from the starting point of a transmission path.

17. Multiprocessor system according to Claim 16, characterized in that only the reaching of the end point of a transmission path is confirmed by an acknowledgement (ACK...(v)) to the respective starting point, in that if this acknowledgement has not arrived by a predetermined time after the beginning of a transmission, the transmission of the entire message is automatically repeated, and in that all the virtual transmission channels (CH...(v)) occupied in the course of a transmission path to be established remain occupied until the acknowledgement (ACK...(v)) has arrived from the end point, whereas the respective associated physical transmission channels (CH...) are only occupied until the flag (EOT) indicating the end of the message has been received and forwarded to the respective next transmission channel.

18. Multiprocessor system according to one of Claims 13 to 17, characterized in that coupled to the control information (FLIT...(v)) of a message is a flag (REQ...(v)) indicating the priority rating (v) of the respective virtual transmission channel (CHi(v)) used, which flag ensures the assignment of the control information and messages transmitted on the physical transmission channels (CH...) to the individual virtual transmission channels (CH...(v)).

19. Multiprocessor system according to Claim 18, characterized in that the flag (REQ...(v)) specifying the priority rating is transmitted on separate signalling lines parallel to the control information (FLIT...(v)) of a message and initiates as a request signal the path selection in the respective connection node (VK...) reached.

20. Multiprocessor system according to Claim 18 or 19, characterized
- in that a number (3) of selection devices (CHSEL-ST(v)) corresponding to the number (e.g. 3) of associated virtual channels (CH...(v), where v = 2, 1 or 0) is provided for each physical transmission channel (CH...) arriving at a connection node (VK...), the appropriate one of which selection devices being selected in each case on the basis of the flag (REQ...(v)) specifying the priority rating (v),
- in that the selection device (e.g. CHSEL-ST(v0)) selected in each case generates a virtual path signal (CHSELij(v)) on the basis of the destination address (ZVKAD, UNAD) contained in the control information, which path signal indicates the respective incoming channel (CHi(v)) and the respective outgoing transmission channel (CHj(v)) to be connected thereto,
- in that all virtual path signals (CHSEL(i)(j)(v)) generated in this way are passed to a shared priority controller (PRIO-ST) which determines for each outgoing free transmission channel (CHj(v)) the incoming channel (CHi(v)) with the highest priority to be switched through to it, and in that on the basis of the result (REQij) then stored, the associated physical transmission path for the transmission is released with simultaneous blocking of all other path signals (CHSEL(i) (j) (v)) relating to the same outgoing virtual transmission channel (CHj(v)).

21. Multiprocessor system according to one of Claims 1 to 20, characterized in that faulty connection channels (K...) between connection nodes (VK...) are taken into account during the respective generation of the path signals (CHSEL(i) (j) (v)) in the individual connection nodes.

22. Multiprocessor system according to one of Claims 1 to 21, characterized in that channel assignments between individual connection nodes caused by various possible configurations of the multiprocessor system are taken into account by a switchover controller (UST) dependent on the configuration when the virtual path signals (CH(i) (j) (v)) are generated in the individual connection nodes (VK...).

23. Multiprocessor system according to one of Claims 1 to 22, characterized in that given a plurality of physical connection channels (K...) between two neighbouring connection nodes (VK...), the different virtual transmission channels (CH...(v)) are assigned to different physical connection channels.

24. Multiprocessor system according to one of Claims 1 to 23, characterized in that the connection nodes (VK...) form corner points of an n-dimensional Boolean cube having n connection channels at each connection node (VK...), in that every connection node is characterized by a binary address (e.g. 001) comprising n bits in each case, with each bit position corresponding to one coordinate (e.g. x or y or z) and consequently to one connection channel (e.g. Kx or Ky or Kz) of the n-dimensional system, and in that, for selecting an outgoing connection channel in the course of establishing a transmission path, in each case the bit positions of the destination address (e.g. ZVKAD = 101) are compared with those of the respective node (e.g. VKAD = 000), whereby, given a predetermined ranking of the bit positions, in each case the highest ranking one of the bit positions that deviate from one another determines the connection channel (e.g. Kx) to be selected.

25. Multiprocessor system according to one of Claims 1 to 23, characterized in that in the case of connection networks (VN) in which ensuring deadlock-free traffic between the individual connection nodes (VK...) necessitates an operation of the connection channels (K...) as virtual channels (K(vv)), and the establishment of a transmission path between each possible pair of connection nodes is carried out in accordance with a predetermined path seeking algorithm based on the use of virtual connection channels, the instruction-related priority ratings (e.g. v = 2, 1 or 0) of the virtual transmission channels (CH...(v)) are overlaid on the individual virtual connection channels (K(vv)).

## Revendications

1. Système multiprocesseur à mémoire commune, qui est subdivisée en plusieurs unités de mémoire pouvant être commandées individuellement et auxquelles les différents processeurs peuvent accéder par l'intermédiaire d'un système de communication pour l'échange de données et d'informations de commande, caractérisé par le fait
- que le système de communication (VN) est constitué par plusieurs noeuds de liaison (VK...), auxquels respectivement au moins un processeur (CPU...) et/ou une unité de mémoire (MU...) et/ou une unité d'entrée/sortie (IOP...) sont raccordés par l'intermédiaire de canaux de transmission individuels bidirectionnels (CH...),
- que les différents noeuds de liaison (par exemple BKl) sont reliés, en fonction d'une structure prédéterminée du réseau, par l'intermédiaire de canaux de liaison bidirectionnels (K...) en tant que canaux de transmission (CH...), à d'autres noeuds de liaison (par exemple VK2) du système de communication (VN) de sorte que des voies de transmission entre chacun des noeuds de liaison et un second noeud de liaison quelconque en tant que destination peuvent être établies dans le système de communication par l'intermédiaire d'un ou de plusieurs canaux de transmission travaillant en série, sur la base de l'adresse de destination contenue dans l'information de commande respective,
- que pour éviter des blocages du système, des canaux virtuels de transmission (CH...(v)) possédant des rangs différents de priorité (par exemple v = 2, 1 ou 0) sont associés aux différents canaux de transmission physiques (CH...) et que pour l'établissement d'une liaison entre deux unités situées dans des noeuds de liaison différents, on utilise respectivement une seule voie de transmission autorisée qui s'étend le long d'une chaîne, prédéterminée conformément à un graphe de dépendance sans boucle, des canaux de transmission virtuels formés, et
- que la voie de transmission qui doit être établie respectivement entre deux unités (par exemple M1 et M2), passe par des canaux de transmission virtuels ayant le même rang de priorité (par exemple v = 0).

2. Système multiprocesseur suivant la revendication 1, caractérisé par le fait que le choix du rang de priorité (v) des canaux de transmission virtuels (CH...(v)), qui forment une voie de transmission, dépend uniquement du type de l'ordre concernant l'établissement de la voie de transmission et envoyé à l'unité de destination (par exemple M...).

3. Système multiprocesseur suivant la revendication 2, caractérisé par le fait que dans le cas d'ordres successifs, déclenchés par un ordre primaire (par exemple lecture) appliqué à une unité de destination (par exemple M...), pour d'autres unités de destination (par exemple CA..., CPU...), pour exécuter l'ordre primaire pour chaque nouvelle voie de transmission conditionnée de ce fait, on utilise respectivement des canaux de transmission virtuels ayant un rang de priorité modifié conformément à un schéma prédéterminé.

4. Système multiprocesseur suivant la revendication 3, caractérisé par le fait que des ordres primaires (lecture, enregistrement) sont transmis toujours uniquement par des unités opérationnelles (processeur CPU...) d'une unité d'entrée/de sortie (IOP...) à des unités de mémoire (M...) du système de mémoire distribué et sont transmises, par l'intermédiaire de canaux de transmission virtuels ayant le rang de priorité le plus faible (par exemple v = 2), tandis que pour chaque autre voie de transmission pour l'exécution d'un ordre suivant, on utilise respectivement des canaux de transmission virtuels ayant un rang de priorité plus élevé (v = 1 ou v = 0), les unités opérationnelles (CPU..., IOP...) qui demandent des données de lecture étant prêtes à tout moment pour la réception des données de lecture.

5. Système multiprocesseur suivant la revendication 4, caractérisé par le fait que dans le cas de l'utilisation d'antémémoires individuelles (CA...), branchées en amont des processeurs (CPU...), un ordre primaire pour la lecture de données à partir de l'une des unités de mémoire (par exemple M2), qui sont situées dans une antémémoire individuelle (par exemple CA1), déclenche un premier ordre suivant retransmettant la demande de lecture à l'antémémoire concernée (CA1), qui peut être déconnectée à tout moment, et au moins un ordre suivant retransmettant les données désirées à l'unité demandeuse (par exemple IOP2), et que l'unité de mémoire (M2), qui reçoit respectivement un ordre de lecture, est bloquée, pour la réception d'autres ordres primaires, jusqu'à ce que soit garantie la transmission des données à l'unité demandeuse (IOP2).

6. Système multiprocesseur suivant la revendication 5, caractérisé par le fait que les données devant être retransmises à l'unité demanderesse (par exemple IOP2 ) sont retransmises par l'antémémoire concernée (par exemple CA1) dans le cadre d'un ordre suivant particulier, uniquement à l'unité de mémoire concernée (par exemple M2) et ensuite, à partir de là, à l'unité demanderesse (IOP2), que l'unité de mémoire (M2), qui exécute l'ordre de lecture, est libérée respectivement après qu'ait été garantie l'association des données pour l'unité demanderesse (IOP2) pour la réception d'autres ordres primaires, et qu'on utilise des canaux de transmission virtuels ayant un même rang de priorité (par exemple v = 0) pour les deux dernières voies de transmission.

7. Système multiprocesseur suivant la revendication 5, caractérisé par le fait que les données devant être retransmises à l'unité demanderesse (par exemple IOP2) sont retransmises directement de l'antémémoire concernée (par exemple CA1) à l'unité demanderesse (IOP2) et que l'unité de mémoire (par exemple M2), qui exécute l'ordre de lecture associé signale, par une information particulière, la transmission des données à l'unité demanderesse (IOP2) et, sur la base de cette information, le blocage existant pour la réception d'autres ordres primaires est à nouveau supprimé.

8. Système multiprocesseur suivant la revendication 7, caractérisé par le fait que l'information particulière est émise sous la forme d'un ordre suivant à l'unité de mémoire associée concernée (par exemple M2) et que pour cette voie de transmission, on utilise des canaux de transmission virtuels (CH...(v)) possédant le même rang de priorité (par exemple v = 0) que pour la voie de transmission pour la retransmission des données à l'unité demanderesse (par exemple IOP2).

9. Système multiprocesseur suivant la revendication 7, caractérisé par le fait que l'information particulière est envoyée, par l'intermédiaire d'un réseau particulier, à l'unité de mémoire associée (par exemple M2).

10. Système multiprocesseur suivant la revendication 8 ou 9, caractérisé par le fait que l'information particulière est émise par l'antémémoire (par exemple CA1), qui retransmet les données à l'unité demanderesse (par exemple IOP2).

11. Système multiprocesseur suivant la revendication 8 ou 9, caractérisé par le fait que l'information particulière est émise par l'unité demanderesse (par exemple IOP2), qui reçoit les données.

12. Système multiprocesseur suivant l'une des revendications 4 à 11, caractérisé par le fait que tous les transferts de données se déroulent dans le cadre d'ordres successifs par l'intermédiaire de canaux virtuels (CH(iv)) possédant le rang de priorité maximum (par exemple v = 0).

13. Système multiprocesseur suivant l'une des revendication 1 à 12, caractérisé par le fait que chaque information qui arrive dans un canal de transmission virtuel (par exemple CHi(v)) à un noeud de liaison (VK), est transférée dans une mémoire tampon qui est associée au canal virtuel, que le canal de transmission virtuel de départ qui doit être occupé (par exemple CHj(v)), est déterminé sur la base de l'information de commande transmise conjointement et que l'information est retransmise lorsque le canal de départ nécessaire (CHj(v)) est libre.

14. Système multiprocesseur suivant la revendication 13, caractérisé par le fait que des informations sont subdivisées en des parties de longueur constante et que chaque information est précédée par une information de commande (FLIT...(v)) sur l'étendue en longueur d'une partie d'informations, toutes les parties étant émises de façon continue successivement à partir du point de départ respectif d'une voie de transmission et que la fin de l'information est caractérisée de façon particulière (avec EOT), et que les différentes parties de l'information sont retransmises sur la base de l'information de commande précédente (FLIT...(v)) d'un noeud de liaison (VK...) à un noeud de liaison (VK...) autre, par l'intermédiaire de la mémoire tampon respective, jusqu'à ce que le point d'extrémité de la voie de transmission soit atteint.

15. Système multiprocesseur suivant la revendication 14, caractérisé par le fait que lorsqu'un canal de transmission occupé est atteint, la poursuite de l'émission de parties d'informations et leur retransmission sont arrêtées jusqu'à ce que le canal nécessaire devienne libre.

16. Système multiprocesseur suivant la revendication 14, caractérisé par le fait que lorsqu'un canal de transmission occupé est atteint, l'émission de l'information totale est répétée à partir du point de départ d'une voie de transmission.

17. Système multiprocesseur suivant la revendication 16, caractérisé par le fait que seul le fait que le point d'extrémité d'une voie de transmission est atteint est confirmé au point de sortie respectif par une signalisation en retour (ACK...(v)), qu'en l'absence de cette signalisation en retour et jusqu'au bout de l'écoulement d'un intervalle de temps prédéterminé après le début d'une émission, l'émission de l'ensemble de l'information est répétée automatiquement et que tous les canaux de transmission virtuels (CH...(v)) occupés dans le cadre d'une voie de transmission devant être établie, restent occupés jusqu'à ce que la signalisation en retour (ACK...(v)) soit arrivée à partir du point d'extrémité, tandis que les canaux de transmission physiques respectivement associés (CH...) restent occupés uniquement jusqu'à ce que le signal caractéristique (EOT) indiquant la fin de l'information soit reçu et soit retransmis au canal de transmission respectivement suivant.

18. Système multiprocesseur suivant l'une des revendications 13 à 17, caractérisé par le fait qu'à l'information de commande (FLIT...(v)) d'une information est couplé un signal caractéristique (REQ...(v)) qui indique le rang de priorité (v) du canal de transmission virtuel utilisé (CHi(v)), que l'association des informations de commande et des messages, transmis dans les canaux de transmission physiques (CH...), aux canaux de transmission virtuels individuels (CH...(v)), est garantie.

19. Système multiprocesseur suivant la revendication 18, caractérisé par le fait que le signal caractéristique (REQ...(v)) qui fixe le rang de priorité, est transmis dans des lignes particulières de transmission de signaux parallèlement à l'information de commande (FLIT...(v) d'un message et que la sélection de la voie d'acheminement dans le noeud de liaison (VK...) respectivement atteint est déclenchée en tant que signal de demande.

20. Système multiprocesseur suivant la revendication 18 ou 19,
caractérisé par le fait
- que pour chaque canal de transmission physique (CH...) qui arrive dans un noeud de liaison (VK...), il est prévu un nombre (3), qui correspond au nombre (par exemple 3) des canaux virtuels associés (CH...(v) avec v = 1, 2 ou 0), de dispositifs de sélection (CHSEL-ST(v)) parmi lesquels le dispositif respectivement concerné est sélectionné sur la base du signal caractéristique (REQ...(v)) qui fixe le rang de priorité (v),
- que le dispositif de sélection respectivement sélectionné (par exemple CHSEL-ST(v0)) produit, sur la base de l'adresse de destination (ZVKAD, UNAD), contenu dans l'information de commande, un signal virtuel de voie de transmission (CHSELij(v)) qui caractérise le canal respectivement arrivant (CHi(v)) et le canal de transmission de départ (CHj(v)) qui doit être relié respectivement à ce canal,
- que tous les signaux virtuels de voie de transmission (CHSEL(i)(j)(v)) produits de cette manière sont envoyés à une unité commune de commande de priorité (PRIO-ST) qui détermine, pour chaque canal de transmission de départ libre (CHj(v)) le canal d'arrivée (CHi(v)), devant être interconnecté à ce canal et qui possède la priorité maximale, et que, sur la base du résultat (REQij) alors mémorisé, la voie de transmission physique associée est libérée pour la transmission moyennant un blocage simultané de tous les autres signaux de voie (CHSEL(i)(j)(v)) concernant le même canal de transmission virtuel de départ (CHj(v)).

21. Système multiprocesseur suivant l'une des revendications 1 à 20, caractérisé par le fait que des canaux de liaison perturbés (K...) entre des noeuds de liaison (VK...) sont pris en compte lors de la production respective des signaux de voie de transmission (CHSEL(i)(j)(v)) dans les différents noeuds de liaison.

22. Système multiprocesseur suivant l'une des revendications 1 à 21, caractérisé par le fait que des affectations de canaux, qui sont conditionnées par différentes configurations possibles du système multiprocesseur, entre différents noeuds de liaison sont pris en compte par l'unité de commande de commutation (UST) qui dépend de la configuration, lors de la production des signaux virtuels de voie de transmission (CH(i)(j)(v)) dans les différents noeuds de liaison (VK...).

23. Système multiprocesseur suivant l'une des revendications 1 à 22, caractérisé par le fait que dans le cas de plusieurs canaux de liaison physiques (K...) entre deux noeuds de liaison voisins (VK...), les différents canaux de transmission virtuels (CH...(v)) sont associés à différents canaux de liaison physiques.

24. Système multiprocesseur suivant l'une des revendications 1 à 23, caractérisé par le fait que les noeuds de liaison (VK...) forment des sommets d'un cube booléen à n dimensions, comportant n canaux de liaison dans chaque noeud de liaison (VK...), que chaque noeud de liaison est caractérisé par une adresse binaire (par exemple 0,01) constituée respectivement de n bits, chaque position binaire correspondant à une coordonnée (par exemple x ou y ou z) et par conséquent à un canal de liaison (par exemple Kx ou Ky ou Kz) du système n dimensions, et que pour la sélection d'un canal de liaison de départ, dans le cadre de l'établissement d'une voie de transmission, respectivement les positions binaires de l'adresse de destination (par exemple ZKAD = 101) sont comparées à celles du noeud respectif (par exemple VKAD = 000), auquel cas pour une succession ordonnée prédéterminée des positions binaires, respectivement la position binaire de rang maximum parmi les positions binaires, qui diffèrent entre elles, détermine le canal de liaison devant être sélectionné (par exemple Kx).

25. Système multiprocesseur suivant l'une des revendications 1 à 23, caractérisé par le fait que dans le cas de réseaux de liaison (VN), dans lesquels l'assurance d'un trafic sans blocage entre les différents noeuds de liaison (VK...) requiert un fonctionnement des canaux de liaison (K...) en tant que canaux virtuels (K(vv)) et l'établissement d'une voie de transmission entre les noeuds de liaison de chaque couple possible de noeuds de liaison s'effectue en fonction d'un algorithme prédéterminé de recherche de voies d'acheminement, qui est basé sur l'utilisation de canaux de liaison virtuels, les rangs de priorité (par exemple v = 2, 1 ou 0), qui sont rapportés aux ordres des canaux de transmission virtuels (CH...(v)), sont superposés aux différents canaux de liaison virtuels (K(vv)).
